# EUROPEAN PATENT APPLICATION

(11) **EP 2 355 300 A2**
(43) Date of publication of application: **10.08.2011**
(21) Application number: 11000624.4
(22) Date of filing: 26.01.2011
(51) Int. Cl.: H02J 7/00

(54) **Solar cell power supply device and rechargeable battery solar charging method**

(30) Priority: 28.01.2010 JP 2010017497
(71) Applicant: Sanyo Electric Co., Ltd., Osaka 570-8677 (JP)
(72) Inventor: Mino, Takayuki, Moriguchi-shi Osaka 570-8677 (JP); Morina, Kenichi, Moriguchi-shi Osaka 570-8677 (JP); Kurihara, Toshitake, Moriguchi-shi Osaka 570-8677 (JP)
(74) Representative: Hertz, Oliver

(57) **Abstract**

A charging operation controlling portion controls charging current of charging voltage when the battery pack 440 is charged with electric power generated by the solar panel 410. The current detecting portion 456 detects charging current of the battery pack. The voltage detecting portion 455 detects battery voltage of the battery pack. The charging operation controlling portion, when the battery pack 440 is brought close to the fully-charged state, cuts off the charging current at predetermined timing for a charging operation stop period, and compares the battery voltage of the battery pack 440 with a predetermined voltage value as a restart voltage value in the charging operation stop period. The charging operation controlling portion determines that the battery pack 440 is fully charged if the battery voltage of the battery pack 440 is not less than the predetermined voltage value as the restart voltage value, and cuts off the charging current.

## Description

### BACKGROUND OF THE INVENTION

### 1. Field of the Invention

The present invention relates to a solar cell power supply device that generates electric power by sunlight and charges a rechargeable battery with the generated electric power and a method for charging the rechargeable battery by using the solar battery, and in particular to a solar cell power supply device that includes a solar battery and a rechargeable battery directly connected to each other without a DC/DC converter connected between them but can stably charge the rechargeable battery by using the solar battery and a method for charging the rechargeable battery by using the solar battery.

### 2. Description of the Related Art

In terms of environmental issues such as CO₂ reduction, an electric power system has been proposed that stores electric power generated without using fossil fuels by using natural energy sources and uses the stored electric power (for example, see Japanese Patent Laid-Open Publication No. 2008-141806.

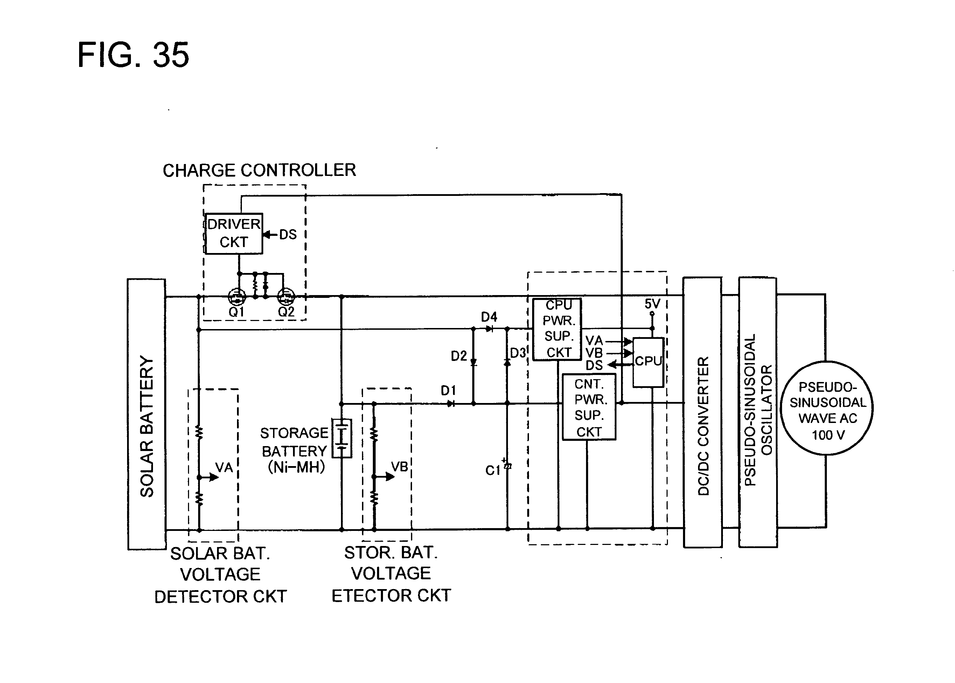

In this type of electric power system, as shown in Fig. 35, a solar battery and a rechargeable battery are connected to each other by switch elements, and a control circuit controls ON/OFF of the switch elements so that charging operation of the rechargeable battery from the solar battery is controlled. Thus, electric power is generated by sunlight during the daytime and is stored in the rechargeable battery so that the rechargeable battery can be discharged to supply electric power when necessary.

### SUMMARY OF THE INVENTION

In this type of electric power system, the rechargeable battery is charged not with stable power source such as usual commercial power the output of which is stable, but with unstable electric power the output of which substantially varies in accordance with sunlight power. It is difficult for solar batteries to constantly generate stable electric power. The electric power generated by solar batteries varies depending on weather conditions, the time of day, seasons and the like. In particular, the variation with each passing minute is very large. In order to stably use rechargeable batteries for a long time, it is important that rechargeable batteries are charged into the fully-charged state under proper conditions such as proper current value and voltage value depending on the type of the rechargeable battery to be used so as to be prevented from being overcharged.

For this reason, it is not easy to charge rechargeable batteries accurately into the fully-charged state by using solar batteries, which are an unstable electric power source. In charging operation, it is necessary to properly detect that a rechargeable battery is fully charged whereby cutting off the charging current. Also, it is difficult to determine the charging current cutting-off timing. Generally, the fully-charged state is detected based on the charging current, voltage, and the like. However, the charging current obtained by solar batteries substantially varies with each passing minute. For this reason, when the current value decreases, it cannot distinguish whether the current value decrease is resulted from the state of the rechargeable battery approaching the fully-charged state or the reduction of electric power generated by a solar battery. Accordingly, it is very difficult to detect the fully-charged state. There is a problem in that the fully-charged state may be often improperly detected.

If the charging current cutting-off timing is delayed, the rechargeable battery may be over-charged, which in turn reduces the life of the rechargeable battery. Some types of rechargeable batteries are substantially affected when over-charged. On the other hand, if it is too early to cut off the charging current, the charging operation stops before the rechargeable battery is brought into the fully-charged state. As a result, the rechargeable battery can supply only a reduced electric capacity. In this case, the rechargeable battery cannot deliver its own electric capacity performance. As discussed above, in conventional power supply devices that include combined solar batteries and rechargeable batteries, it has been difficult to sufficiently deliver the performance of the rechargeable batteries.

The present invention is devised to solve the above problems. It is a main object of the present invention to provide a solar battery power supply device that includes combination of a solar battery and a rechargeable battery and can properly charge the rechargeable battery, and a method for charging a rechargeable battery by using a solar battery that can properly charge the rechargeable battery.

In order to achieve the above object, a solar battery power supply device according to a first aspect of the present invention includes a battery pack, a solar panel, a charging operation controlling portion, and a voltage detecting portion. The battery pack includes a plurality of rechargeable battery cells connected to each other in series or in parallel. The solar panel includes a plurality of solar cells capable of generating electric power for charging the battery pack. The charging operation controlling portion can control charging current or charging voltage when the battery pack is charged with electric power generated by the solar panel. The voltage detecting portion detects battery voltage of the battery pack. The charging operation controlling portion, when the battery pack is brought close to the fully-charged state, cuts off the charging current at predetermined timing for a charging operation stop period, and compares the battery voltage of the battery pack with a predetermined voltage value as a restart voltage value in the charging operation stop period. The charging operation controlling portion determines that the battery pack is fully charged if the battery voltage of the battery pack is not less than the predetermined voltage value as the restart voltage value, and cuts off the charging current. According to this construction, it is possible to reliably detect the fully-charged state. Thus, it is possible to eliminate or reduce improper detection of the fully-charged state caused by variation of charging current. Therefore, it is possible to safely use a rechargeable battery and maximize the performance of the rechargeable battery.

In a solar battery power supply device according to a second aspect of the present invention, a battery box can be included that accommodates the battery pack and the charging operation controlling portion. According to this construction, required components can be accommodated in the unit type battery box, and can be connected to the solar panel so that an electric power system can be constructed that can charge/discharge a rechargeable battery.

In a solar battery power supply device according to a third aspect of the present invention, a plurality of the solar panels and a plurality of battery boxes are provided as the battery pack and the battery box, and each of the battery boxes are connected to corresponding one of the solar panels. According to this construction, since a plurality of solar panels can be connected to each other to increase electric power generation, and a plurality of units can be connected to each other, an electric power system can be flexibly constructed depending on required electric power and size.

In a solar battery power supply device according to a fourth aspect of the present invention, a pair of depression or enhancement type FETs is further included that are connected to each other in series in opposite directions between the solar panel and the battery pack, and serve as a reverse current preventing portion that allows charging operation of the battery pack from the solar panel and prevents current from flowing from the battery pack to the solar panel. According to this construction, it is possible to provide a power supply device that has sufficiently reduced ON resistance and small loss as compared with conventional Schottky diodes for preventing reverse current.

In a solar battery power supply device according to a fifth aspect of the present invention, the charging operation controlling portion serves as a charging/discharging operation controlling portion that controls discharging current in addition to the charging current of the battery pack. The charging/discharging operation controlling portion starts controlling the output current of the battery pack in a PWM manner when the voltage of the battery pack becomes not higher than a second cutoff voltage value in discharging operation of the battery pack. According to this construction, even in the case where the capacity of the battery pack decreases, output current can be suppressed in a PWM manner so that driving available time can be practically extended. For this reason, for example, in the case where this solar battery power supply device is used as a power supply device for driving a light as load, it is possible to extend lighting time of this light.

In a solar battery power supply device according to a sixth aspect of the present invention, a charger for charging a battery pack of a power assisted electric bicycle is further included as a load that is driven by the battery pack. According to this construction, it is possible to provide a bike shed and the like with stand-alone bicycle battery pack charge equipment that has electric power generating function.

In a solar battery power supply device according to a seventh aspect of the present invention, a lighting portion is further included that is driven by the battery pack. According to this construction, it is possible to provide a stand-alone lighting device that has electric power generating function.

In a solar battery power supply device according to an eighth aspect of the present invention, the lighting portion includes light emitting diodes. According to this construction, the lighting portion can be a low power consumption light. Therefore, this construction is advantageous in terms of lighting time extension during the nighttime.

In a solar battery power supply device according to a ninth aspect of the present invention, the lighting portion is a street light. According to this construction, since electric power can be generated and stored during the daytime, and can drive the lighting portion during the nighttime, it is possible to provide an environmentally friendly street light.

In a solar battery power supply device according to a tenth aspect of the present invention, the charging voltage for charging the battery cell is set at a voltage value lower than the voltage to be determined that the battery cell is fully-charged from viewpoint of the characteristics of the battery cell. According to this construction, the burden of the battery cells can be reduced, and the life of the battery cells can be increased. Therefore, it is possible to provide a maintenance-free power supply device.

In a solar battery power supply device according to an eleventh aspect of the present invention, the battery cells are lithium-ion rechargeable batteries. According to this construction, since the capacity density can be increased, the size and weight of the battery pack can be suppressed. Therefore, this construction is advantageous in particular in an elevated power supply device. In addition, since an endothermic reaction occurs in charging operation, it is possible to prevent the battery cells from overheating.

In a solar battery power supply device according to a twelfth aspect of the present invention, the rated voltage of the battery pack is 0.7 to 0.9 time the maximum output operation voltage of the solar panel at 25°C. According to this construction, the rated voltage of one cell of the solar panel can be specified to a proper voltage in consideration of influence of battery cell voltage on solar cell operation voltage.

In a solar battery power supply device according to a thirteenth aspect of the present invention, a charging operation available temperature range of the battery cell is set into a range different from a discharging operation available temperature range. The discharging operation available temperature range extends on the low temperature side relative to the charging operation available temperature range. According to this construction, it is possible to efficiently discharge also during the nighttime in which the battery cell temperature generally becomes lower as compared with the battery cell temperature when the battery cell is charged in the daytime.

A rechargeable battery solar charging method according to a fourteenth aspect of the present invention is a method for supplying charging current to a battery pack that includes a plurality of rechargeable battery cells connected to each other in series or in parallel by using electric power generated by a solar panel that includes a plurality of solar cells whereby charging the battery pack. In the method, a charging voltage is detected to determine whether the battery pack is brought close to the fully-charged state, and the charging current is cut off at predetermined timing for a charging operation stop period if it is determined that the battery pack is brought close to the fully-charged state. A battery voltage of the battery pack is detected in the charging operation stop period. It is determined that the battery pack is fully charged if the battery voltage is not lower than a predetermined voltage value as a restart voltage value, and the charging current is cut off. According to this construction, it is possible to reliably detect the fully-charged state. Thus, it is possible to eliminate or reduce improper detection of the fully-charged state caused by variation of charging current. Therefore, it is possible to safely use a rechargeable battery and maximize the performance of the rechargeable battery.
The above and further objects of the present invention as well as the features thereof will become more apparent from the following detailed description to be made in conjunction with the accompanying drawings.

### BRIEF DESCRIPTION OF THE DRAWINGS

Fig. 1 is a schematic view showing an exemplary solar battery power supply device according to an embodiment 1 applied to charging equipment in a bike shed;
Fig. 2 is a schematic view showing a roof of the bike shed shown in Fig. 1 as viewed from the lower side;
Fig. 3 is a block diagram showing the construction of the solar battery power supply device shown in Fig. 1;
Fig. 4 is a schematic view showing the front of a console;
Fig. 5 is a perspective view showing the outward appearance of a battery box as viewed from the upper side;
Fig. 6 is a perspective view showing the battery box shown in Fig. 5 as viewed from the lower surface side;
Fig. 7 is an exploded perspective view showing the battery box shown in Fig. 5 with an upper case being removed;
Fig. 8 is a cross-sectional view of the battery box shown in Fig. 5 taken along the line VIII-VIII;
Fig. 9 is an exploded perspective view showing the battery box shown in Fig. 7 with a battery pack being additionally removed from a lower case;
Fig. 10 is an enlarged perspective view showing a battery holder shown in Fig. 9;
Fig. 11 is an exploded perspective view showing the battery pack;
Fig. 12 is a perspective view showing bending of a lead plate;
Fig. 13 is a graph showing exemplary charging current variation;
Fig. 14 is a circuit diagram showing a charge control portion of the solar battery power supply device;
Fig. 15 is a circuit diagram showing a charging/discharging operation controlling portion;
Fig. 16 is a flowchart showing a charging method for charging the battery pack by using a solar panel;
Fig. 17 is a graph showing time variation of charging/discharging current in the case where the battery pack is charged by using a solar panel in a conventional charging method;
Fig. 18 is a graph showing time variation of charging/discharging current in the case where the battery pack is charged by using the solar panel in the charging method according to the embodiment 1;
Fig. 19 is a circuit diagram showing the charging/discharging operation controlling portion according to a modified embodiment;
Fig. 20 is a block diagram showing a solar battery power supply device according to a modified embodiment that can be connected to commercial power;
Fig. 21 is a perspective view showing the outward appearance of a solar battery power supply device according to an embodiment 2 as viewed from the front side;
Fig. 22 is a perspective view showing the solar battery power supply device shown in Fig. 21 as viewed from the back surface side;
Fig. 23 is a perspective view showing the solar battery power supply device shown in Fig. 22 with a battery cover being removed whereby exposing a battery box;
Fig. 24 is a perspective view showing the outward appearance of the battery box as viewed from the upper side;
Fig. 25 is a perspective view showing the battery box shown in Fig. 24 as viewed from the lower side;
Fig. 26 is a perspective view showing the front surface of the battery box shown in Fig. 24 as viewed from the lower side;
Fig. 27 is a horizontal sectional view of the battery box shown in Fig. 24 taken along the line XXVII-XXVII;
Fig. 28 is an exploded perspective view showing the battery box shown in Fig. 24 with an outer case being removed;
Fig. 29 is an exploded perspective view showing the battery box shown in Fig. 28 with a battery pack being additionally removed from an inner case;
Fig. 30 is a perspective view showing the battery pack as viewed from the front side;
Fig. 31 is an exploded perspective view showing the battery pack shown in Fig. 30 with battery cells in the top row being detached from battery holders;
Fig. 32 is a perspective view showing a solar battery power supply device according to a modified embodiment as viewed from the back surface side;
Fig. 33 is a perspective view showing a solar battery power supply device according to another modified embodiment as viewed from the back surface side;
Fig. 34 is a graph showing the voltage waveform of a battery cell in charging operation; and
Fig. 35 is a block diagram showing a conventional circuit for charging a rechargeable battery by using a solar battery.

### DETAILED DESCRIPTION OF THE EMBODIMENT(S)

The following description will describe embodiments according to the present invention with reference to the drawings.

### (Embodiment 1)

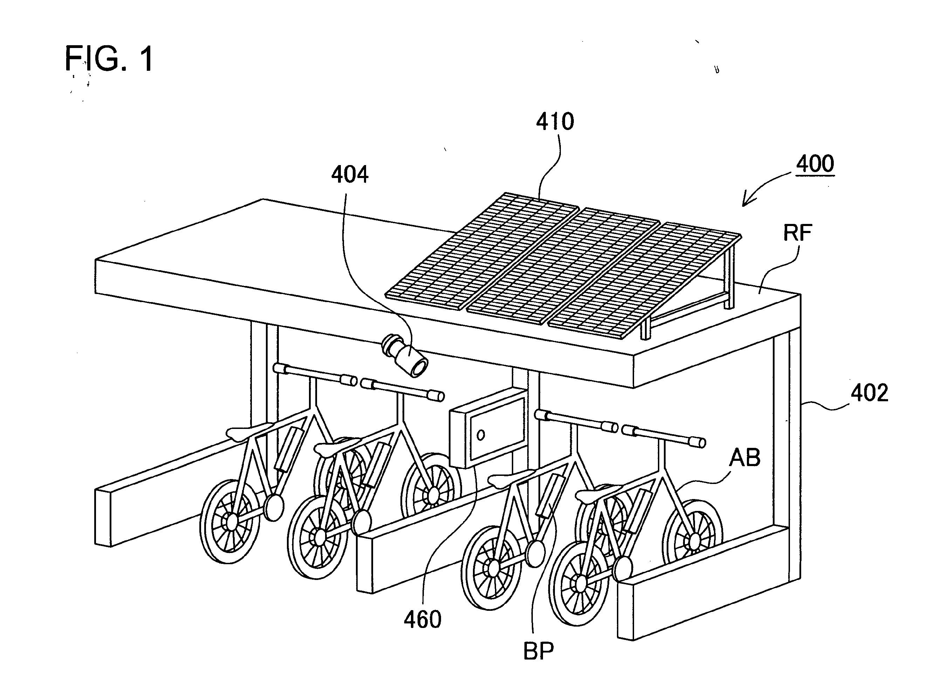

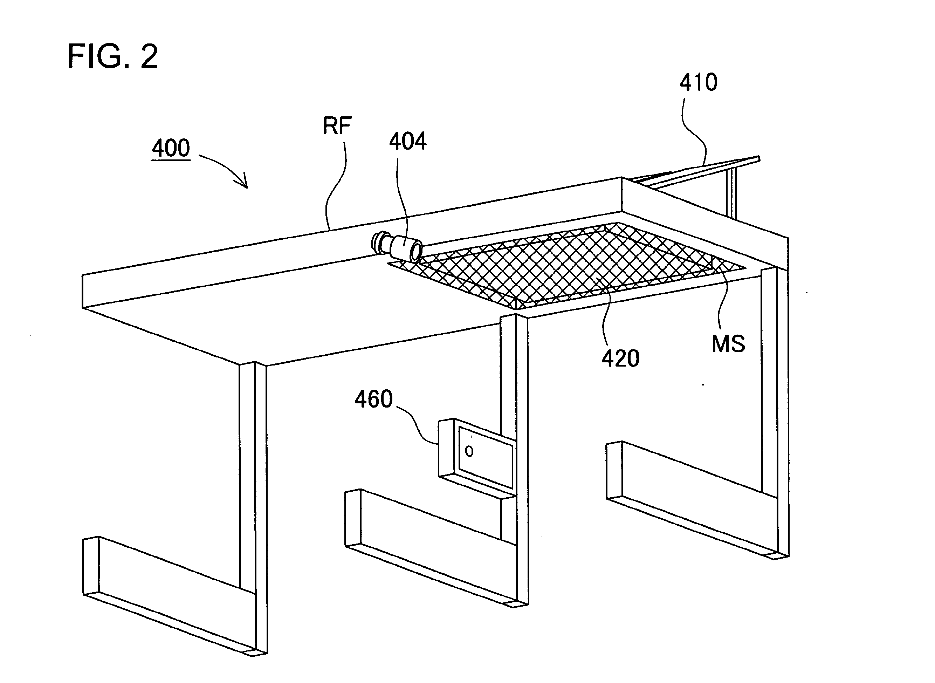

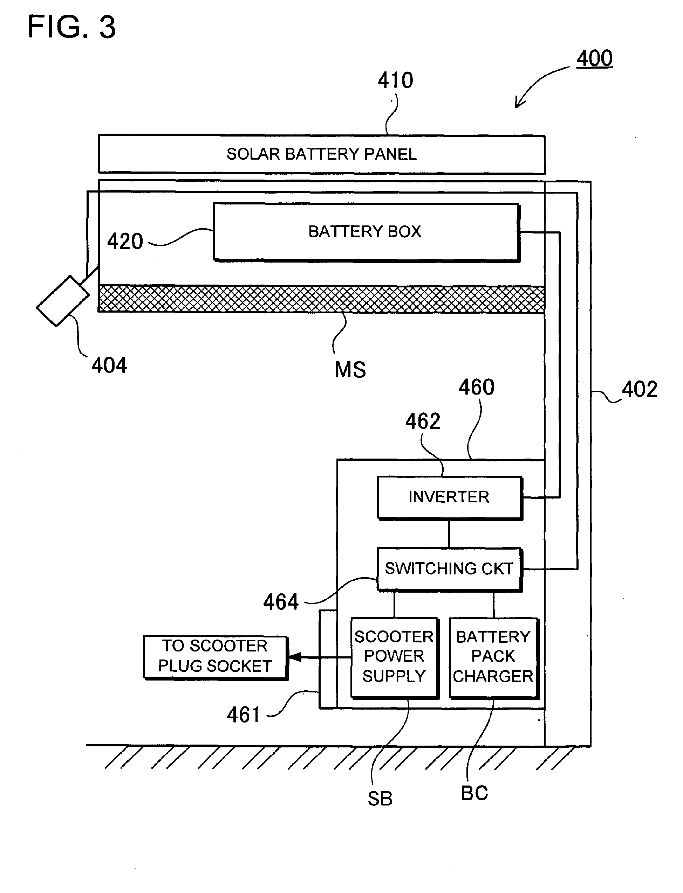

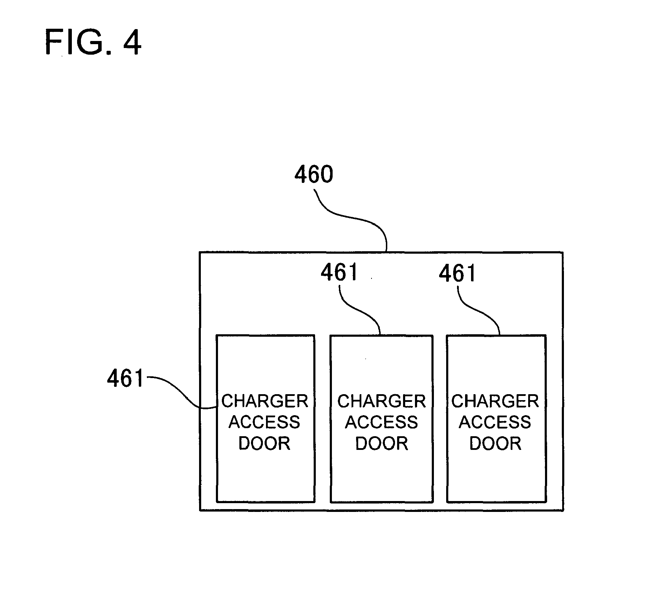

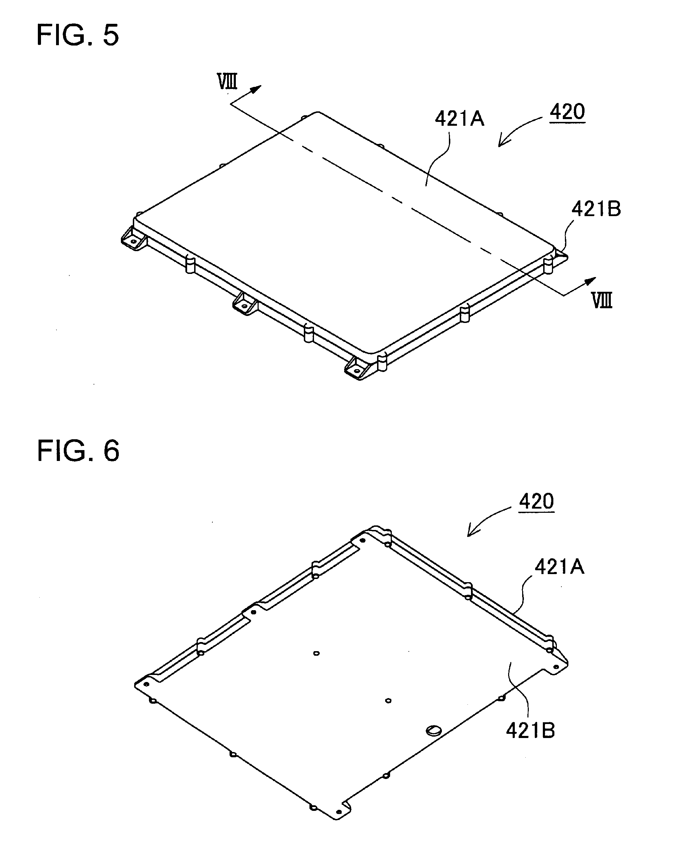

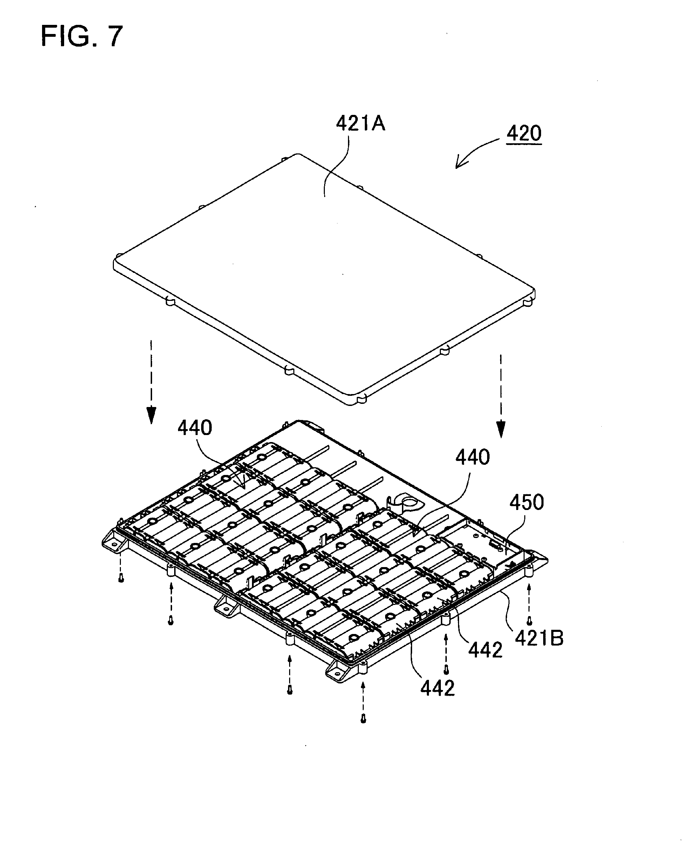

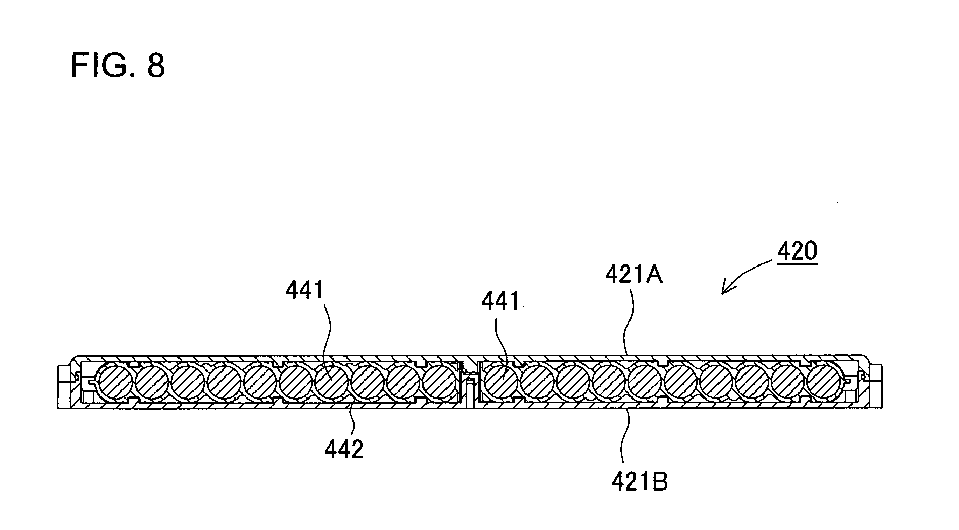

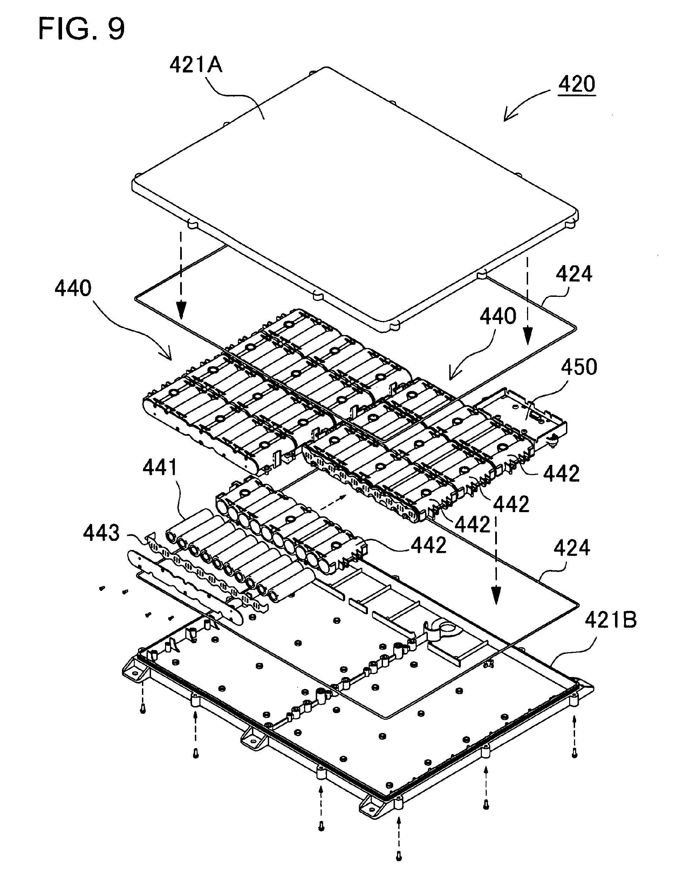

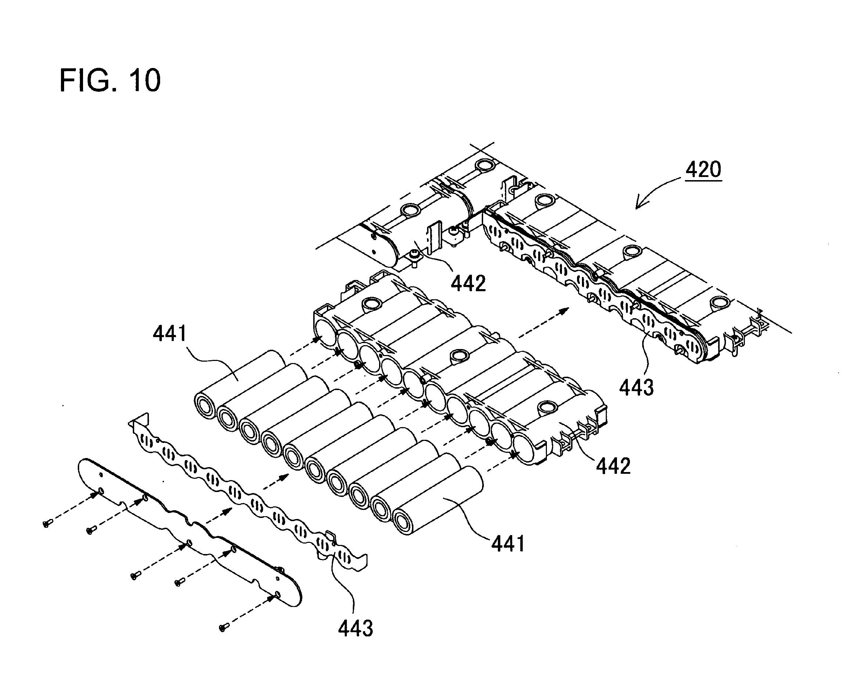

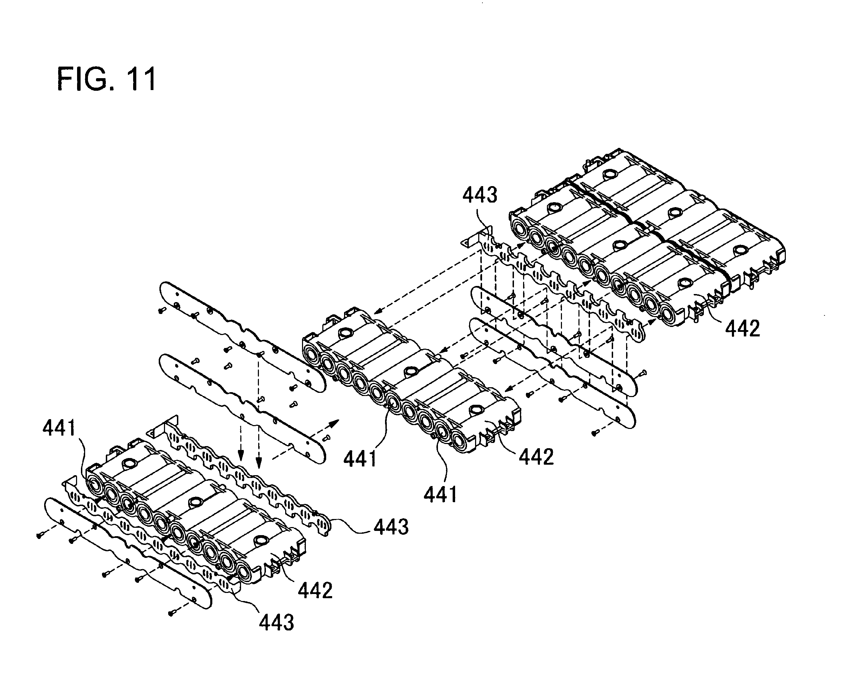

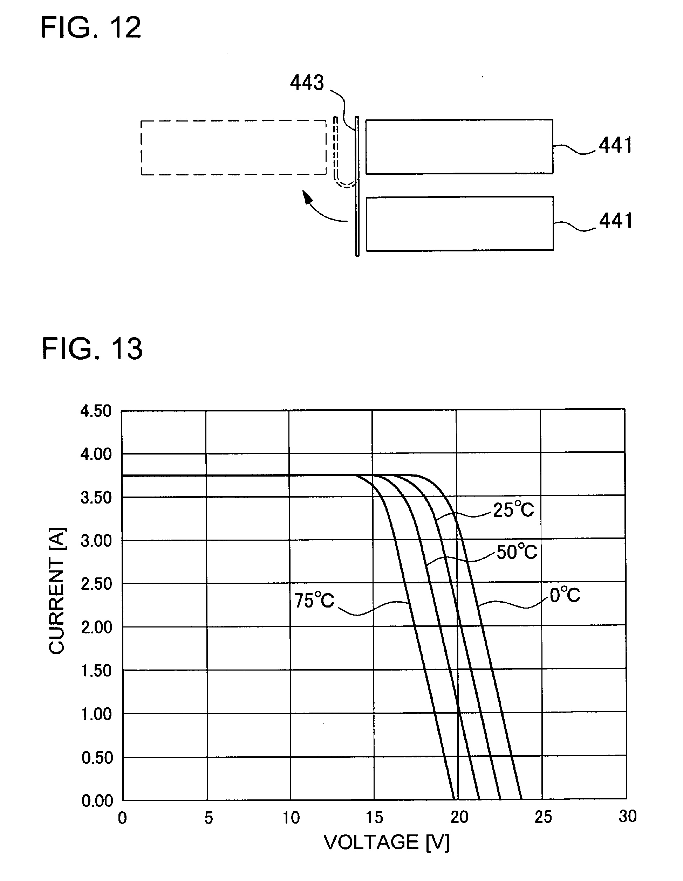

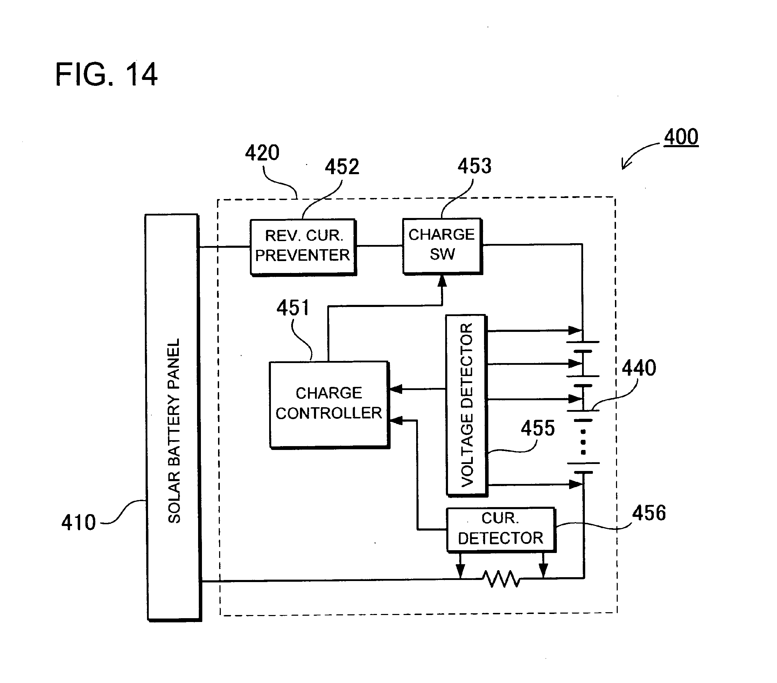

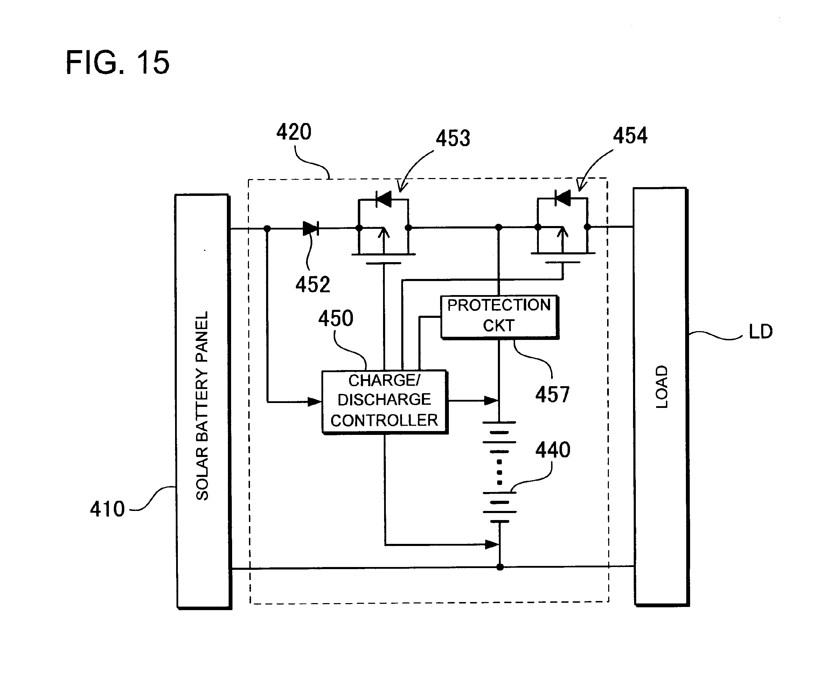

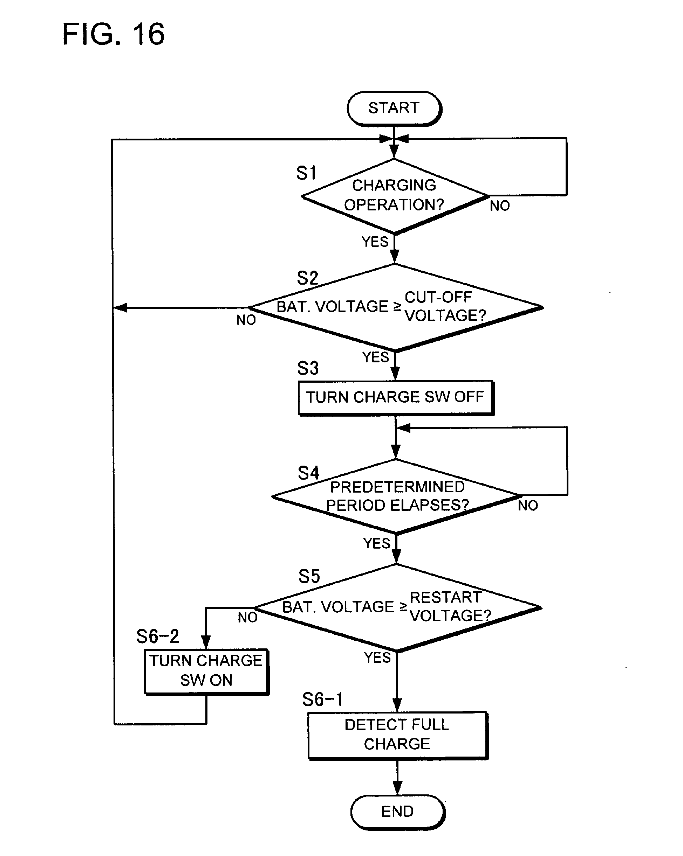

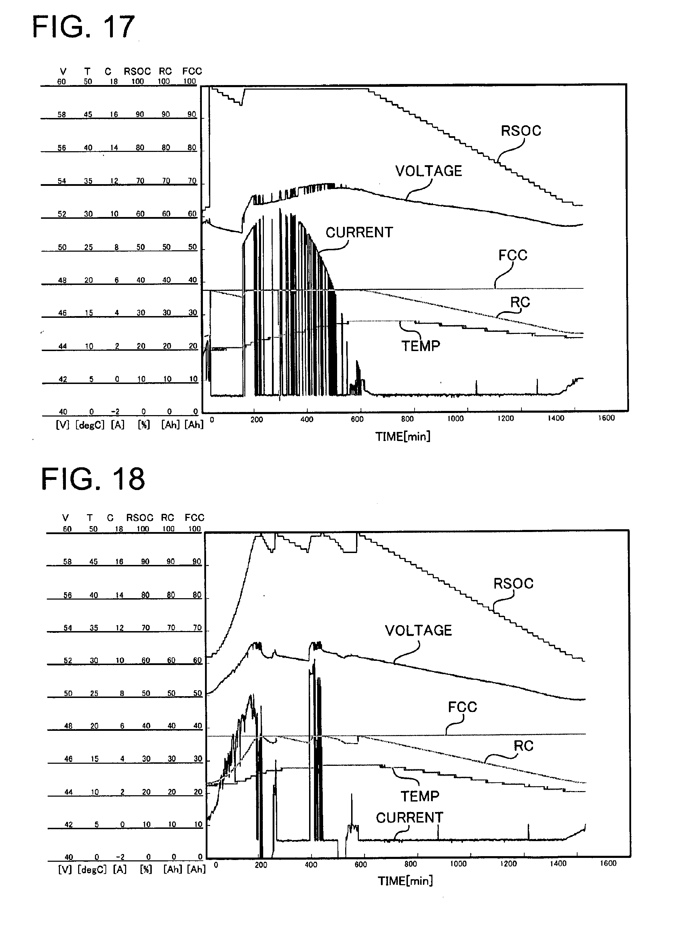

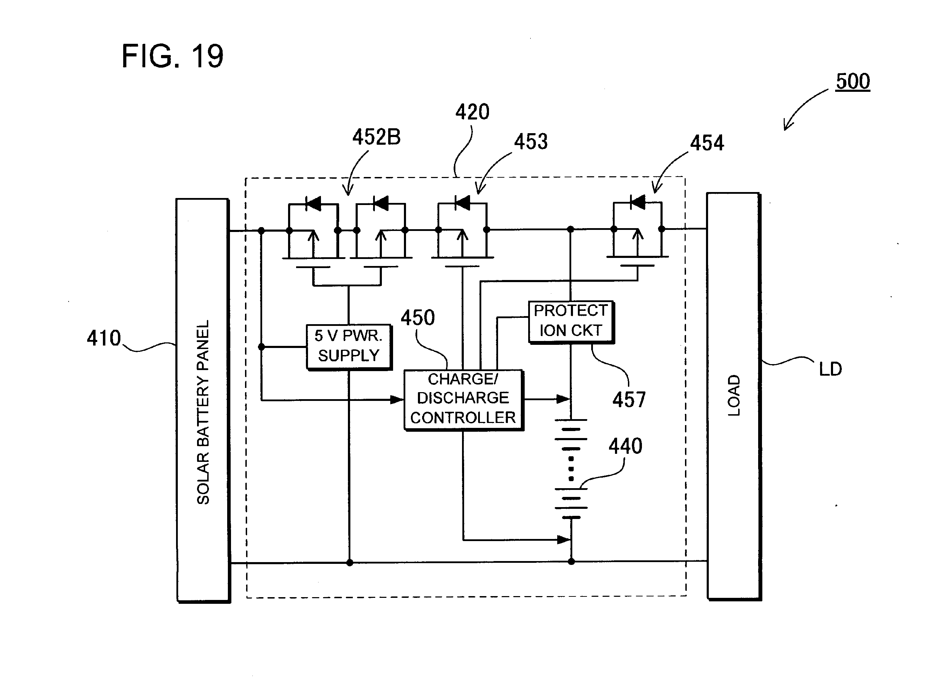

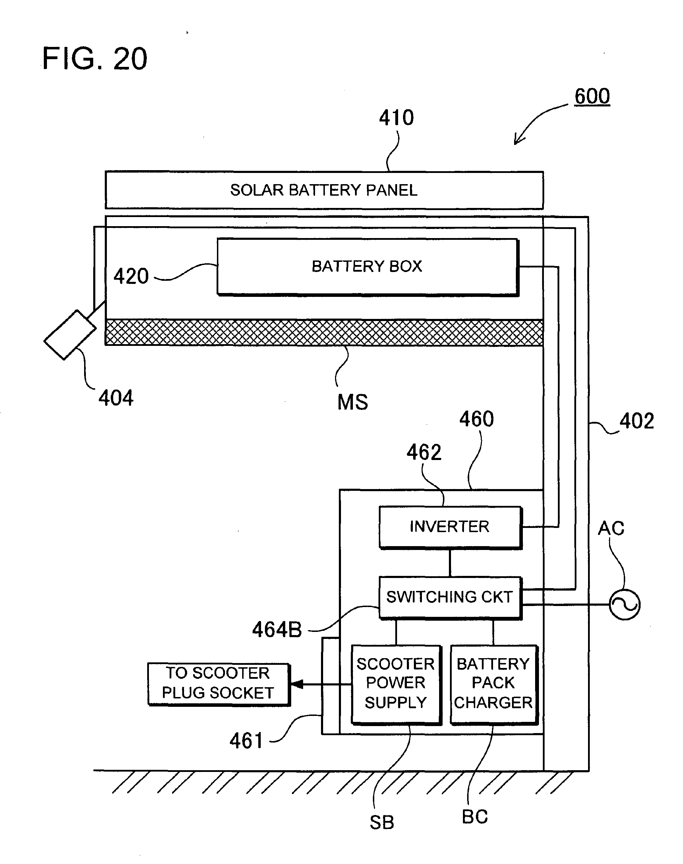

A solar battery power supply device 400 according to an embodiment 1 of the present invention will be described with reference to Figs. 1 to 20. Fig. 1 is a schematic view illustratively showing the solar battery power supply device applied to charging equipment in a bike shed. Fig. 2 is a schematic view showing a roof of the bike shed as viewed from the lower side. Fig. 3 is a block diagram showing the construction of the solar battery power supply device shown in Fig. 1. Fig. 4 is a schematic view showing the front of a console. Fig. 5 is a perspective view showing the outward appearance of a battery box as viewed from the upper side. Fig. 6 is a perspective view showing the battery box shown in Fig. 5 as viewed from the lower surface side. Fig. 7 is an exploded perspective view showing the battery box shown in Fig. 5 with an upper case being removed. Fig. 8 is a cross-sectional view of the battery box shown in Fig. 5 taken along the line VIII-VIII. Fig. 9 is an exploded perspective view showing the battery box with a battery pack being additionally removed from a lower case. Fig. 10 is an enlarged perspective view showing a battery holder shown in Fig. 9. Fig. 11 is an exploded perspective view showing the battery pack. Fig. 12 is a perspective view showing bending of a lead plate. Fig. 13 is a graph showing exemplary charging current variation. Fig. 14 is a circuit diagram showing a charge control portion of the solar battery power supply device. Fig. 15 shows the charge circuit. Fig. 16 is a flowchart showing a charging method for charging the battery pack by using a solar panel. Fig. 17 is a graph showing time variation of charging/discharging current in the case where the battery pack is charged by using a solar panel in a conventional charging method. Fig. 18 is a graph showing time variation of charging/discharging current in the case where the battery pack is charged by using the solar panel in the charging method according to the embodiment 1. Fig. 19 is a circuit diagram showing a charging/discharging operation controlling portion according to a modified embodiment. Fig. 20 is a block diagram showing a solar battery power supply device according to a modified embodiment that can be connected to commercial power.

The illustrated solar battery power supply device 400 is applied to a power supply device that supplies electric power to a charger BC for charging a bicycle battery pack BP in the bike shed that includes the charger BC for charging the battery pack BP of a so-called power assisted electric bicycle AB. In this electric power system, the battery pack charger BC is a load. The load is not limited to this. For example, a light 404 of the bike shed can be driven as the load. The charger is not limited to the charger BC for charging the bicycle battery pack BP. Other type of charger, for example, a charger for charging battery packs of electric scooters, can be included in stead of or in addition to the bicycle battery pack charger. In addition, the electric power system can include a scooter power supply SB that can be connected to electric scooters via charging cable for charging the electric scooters in a plug-in manner, AC 100-V outlets of commercial power, or AC 200-V outlets. Various suitable types of loads can be added depending on applications. The following description will describe an electric power system that drives the battery pack charger BC for charging power assisted electric bicycles, and the light 404.

The electric power system shown in Fig. 1 includes a solar panel 410 arranged on a roof RF of the bike shed, a console 460 arranged under the roof RF at the height accessible to users, and the light 404. As shown in the perspective view of Fig. 2 and the schematic cross-sectional view of Fig. 3, a battery box 420 is arranged on the back surface side of the roof RF. The console 460 is arranged on a support pole 402 that supports the roof RF, for example. The battery box 420 is secured on the lower surface of the roof RF and is prevented from weather-damaged. In addition, a metal mesh net MS protects the surface of the battery box 420, and provide ventilation for heat dissipation.

### (Console 460)

The battery box 420 accommodates the battery pack 440 and the charging/discharging operation controlling portion 450. This battery box 420 is connected to the solar panel 410 and the console 460. The console 460 includes an inverter 462 that converts output voltage from the battery box 420, a switching circuit 464 that is connected between the inverter 462 and a load, the charger BC for charging the power assisted electric bicycle battery pack as the load, and the scooter power supply SB for supplying electric power to electric scooters via the charging cable.

This console 460 includes doors 461 that can be opened/closed as shown in the front view of Fig. 4. When the door 461 is opened, the battery pack BP can be connected to the battery pack charger BC (charger for charging power assisted electric bicycles in the case of Fig. 1). The door 461 of the console 460 is interlocked with the switching circuit 464 via Microswitch or the like. When the door 461 is opened, the switching circuit 464 is turned ON so that the charger is turned ON.

The console 460 may include a display panel that displays current instantaneous generated electric power amount, accumulated generated electric power amount in the day, or the power consumption amount of a load in use.

Although only one battery pack charger BC is included in this embodiment, needless to say, two or more battery pack chargers can be connected. In addition, different types of battery pack chargers may be included. Since the output from the battery box 420 is converted into AC 100-V power same as commercial power by the inverter 462 in the embodiment shown in Fig. 1, various types of electric devices can be connected to the battery box. Therefore, the power supply device has high flexibility. However, a DC/DC converter can be used instead of the inverter. In this case, since the output from the battery box is not converted AC 100-V power but can be directly converted into DC (or AC) voltage that can drive the various types of electric devices to be used as a load, it is possible to improve the conversion efficiency.

### (Light 404)

LEDs can be suitably used for the light 404. The light 404 automatically illuminate during the night time, and automatically stop illuminating during the daytime. The light can be turned ON/OFF based on the generated electric power amount of the solar panel 410. That is, when the generated electric power amount of the solar panel 410 becomes lower than a predetermined value, sunset is detected so that the light is turned ON. Also, when the generated electric power amount of the solar panel 410 becomes higher than a predetermined value, sunrise is detected so that the light is turned OFF. For this reason, illumination sensors and the like can be eliminated.

Although the light can be constantly kept ON, the light may serves as a sensor light that is turned ON when detecting human motion. In this case, it is possible to improve a crime prevention effect. In addition, since the light can be turned OFF if not necessary, the power-saving effect can be improved. For this reason, this construction is preferable for a power supply device that has a limited capacity. Also, since the light 404 does not require commercial power, the light 404 can illuminate even in the event of a power failure or disaster. Therefore, the light 404 can serve as an emergency light.

The thus-constructed solar battery power supply device 400 can be installed on the roof RF of the existing bike sheds. Accordingly, the power supply for charging power assisted electric bicycles or for energizing the light 404 can be added to the existing bike sheds with effectively using the existing equipment. Therefore, the thus-constructed solar battery power supply device 400 is preferable in terms of suppression of capital investment. In particular, if the charging function of the power assisted electric bicycle is added to bike sheds, this function will facilitate the proliferation of power assisted electric bicycles. Accordingly, this function will reduce usage of automobiles and motorcycles. Therefore, it can be expected that this function will facilitate CO₂ reduction.

In the embodiment of Fig. 1, three 210-W power rating class panels are used as the solar panel 410. The three panels are connected to each other in parallel so that the solar panel 410 has a rating power of 630 W. The three solar panels 410, which are connected to each other in parallel, are connected to one battery box 420. Thus, as shown in Figs. 2 and 3, the one battery box 420 is secured onto the back surface side of the roof RF. The output of the three solar panels 410 are connected to the one console 460 via the battery box 420. One inverter 462 converts the voltage from the solar panels 410. The Input voltage provided to the inverter 462 can vary in a range of DC 42 to 60V, and is converted into AC 100-V power as the output voltage from the inverter 462.

### (Battery Box 420)

Figs. 5 and 6 show the exterior shape of the battery box 420. The battery box 420 has a thin plate shape. Attachment portions are arranged on the peripheral parts of the battery box 420. The attachment portions are attachment protrusions that protrude from the four corner parts and central parts of the battery box 420 and have screw holes. Screws are inserted into the screw holes so that the battery box 420 is attached to a desired location, for example, onto the back surface side of the roof RF of the bike shed as shown in Fig. 2.

As shown in Figs. 7 and 8, the battery box 420 includes an upper case 421 A and a lower case 421 B that correspond to divided half parts of the battery box 420. The battery pack 440 and the charging/discharging operation controlling portion 450 can be accommodated inside the upper case 421A and the lower case 421 B. The upper case 421A and the lower case 421 B are formed of metal that is excellent in heat dissipation and stiffness. The upper case 421A and the lower case 421 B are fastened to each other by screws. When the upper case 421A and the lower case 421 B are fastened to each other, an elastic member 424 such as packing member can be interposed on the boundary between the upper case 421A and the lower case 421 B whereby providing the battery box 420 with a waterproof structure. The battery box 420 accommodates two battery packs 440, and the charging/discharging operation controlling portion 450 that is arranged in space between the battery pack 440 and the lower case 421 B as shown in Fig. 7. Battery cells 441 are arranged side by side in column and row directions in each of the battery packs 440. The battery packs 440 are arranged in one row, as shown in the cross-sectional view of Fig. 8. The width of the battery box 420 is designed to provide accommodation space that can accommodate the battery packs 440 in that the battery cell 441 are arranged in one row.

### (Battery Pack 440)

As shown in Figs. 9 and 10, the battery pack 440 includes the battery holders 442 each of which holds the battery cells 441 connected to each other. The battery cell 441 has a cylindrical exterior shape. The battery cells 441 are arranged side by side in parallel to each other, and are held in the battery holder 442. The battery holder 442c is formed by molding into a shape that has side-by-side arranged tubes into which the battery cells 441 can be inserted. The battery holder 442 is formed of resin that is excellent in electrical insulation and heat resistance. Lead plates 443 are arranged on the end surfaces of the battery cells 441 when the battery cells 441 are inserted into the battery holder 442.

### (Lead Plate 443)

The lead plates 443 electrically and mechanically couple the battery holders 442 to each other as shown in Figs. 11 and 12. The lead plate 443 includes two metal plate portions that are connected to each other by a bent portion. The end surfaces of the battery holders 442 are coupled by a metal plate, and are then folded as shown in Fig. 12 so that the battery holders 442 are arranged on a common plane. The metal plate portions of the lead plates 443 can be secured by spot welding or the like to the end surfaces of the battery holders 442 that are arranged in two stages in the folded state before the bent portions of the lead plates 443 are bent. According to this construction, the lead plates can be secured to two battery holders 442 by welding from the same end surface side. Therefore, the working efficiency can be improved. After welding, as shown in Fig. 12, the central bent portion between the metal plate portions is bent into a U shape so that the battery holders arranged in two stages are unfolded into one stage arrangement. Thus, the battery holders 442 are arranged on a common plane, and the opposed surfaces of the battery holders 442 are coupled to each other. In addition, an insulating plate can be arranged on the end surface of the lead plate 443 if necessary so that unintended conduction may not occur.

In the construction of a battery block, ten battery cells 441 are inserted into the battery holder 442 and are electrically connected to each other in parallel. The battery cells 441 of two battery holders 442 arranged adjacent to each other in the traverse direction are connected to each other in parallel as shown in Fig. 8. Four battery holders 442 are arranged adjacent to each other in the length direction as shown in Fig. 9. The battery cells 441 of the four battery holders are serially connected to each other. Thus, in the battery block accommodated in the battery box 420, each of the battery holders 442 includes ten battery cells connected to each other in parallel. The battery pack 440 includes four battery holders 442 that are serially connected to each other. The two battery packs 440 are connected to each other in parallel. Thus, the battery cells 441 are electrically connected to each other in four-serial and twenty-parallel connection in the battery block. This battery block can be charged or can supply electric power.

### (Battery Cell 441)

The cylindrical or tube-shaped battery cells 441 are orientated so that their center axes are parallel to each other. Rechargeable batteries such as lithium ion batteries, nickel-hydrogen batteries, nickel-cadmium batteries can be suitably used as the batteries. In particular, lithium-ion rechargeable batteries are preferably used. Since lithium-ion rechargeable batteries have a high capacity density, lithium-ion rechargeable batteries are suitable for the size reduction and weight reduction of the battery pack 440. The charging/discharging operation available temperature range of lithium-ion rechargeable batteries is wider than lead-acid batteries and nickel-hydrogen batteries. Therefore, lithium-ion rechargeable batteries can be efficiently charged/discharged all the year around.

It is preferable that an iron phosphate group material be used for the positive terminal material of the battery cell 441. In this case, the safety can be improved. Also, the temperature dependency of the charging/discharging operation can be suppressed. Also, the charging/discharging operation efficiency can be kept relatively high in particular even in low temperature range. Therefore, the thus-constructed battery cell can be efficiently charged/discharged.

Also, the positive terminal of the lithium-ion rechargeable battery can be a three-component positive terminal. Mixture of Li-Ni-Mn-Co composite oxide and cobalt acid lithium are used for the positive terminal of the lithium-ion rechargeable battery instead of lithium cobaltate as a conventional material. In the case where three compositional material of Ni-Mn-Co is used for the positive terminal of the lithium-ion rechargeable battery in addition to lithium, the battery can be highly stable in thermal characteristics even if charged at high voltage. The maximum charging voltage can be increased to 4.3 V, and the capacity of the battery can be increased.

However, it is preferable that the voltage in the charging operation of the battery cell 441 to be used be intendedly set at a voltage value lower than a voltage at which it is determined that the battery cell is brought in the fully-charged state. For example, in the case where lithium-ion rechargeable batteries are used, it is generally determined that the lithium-ion rechargeable batteries are brought in the fully-charged state when the voltage of the lithium-ion rechargeable batteries reaches about 4.2 V. However, according to this embodiment, it is determined that the lithium-ion rechargeable batteries are brought in the fully-charged state when the voltage of the lithium-ion rechargeable batteries reaches 4 V. In this case, the life of the battery cell 441 can be improved.

It is preferable that the rated voltage as nominal voltage of the battery pack 440 (battery block), which includes the battery cells 441, be set at a voltage value lower than the maximum output operation voltage Vop of the solar panel 410. In the case of lithium-ion rechargeable batteries, the rated voltage can be obtained by multiplying about 3.7 to 4.0 V/cell by the number of the battery cells that are connected serially to each other. It is preferable that the rated voltage of the battery pack is set at 70 to 90% of Vop. The reason is that, since the operation voltage of the solar panel 410 is influenced by the voltage of the battery pack 440, charging electric power will be short if the rated voltage of the battery pack is away from Vop. Also, as compared with the depth of discharge of the battery pack 440, the voltage of the solar panel 410 will be higher. For this reason, in order to fully charge the battery pack, it is more preferable that the rated voltage of the battery pack be close to Vop when the battery pack becomes close to the fully-charged state. In addition, in consideration of voltage variation of the solar panel 410 with temperature, it is required to properly specify the voltage of the battery pack 440. For this reason, it is more preferable that the voltage of the battery pack fall within the aforementioned voltage range.

Also, in this embodiment, in the case where the voltage of the battery pack fall within the aforementioned voltage range, a DC/DC converter for charging operation of the battery cell 441 can be eliminated. Therefore, in this case, it is possible to reduce electric power loss in such a DC/DC converter. Accordingly, the battery pack can be efficiently charged. Also, replacing of such a DC/DC converter can be eliminated. Also, the component count can be reduced. As a result, it can be expected that the failure rate is reduced, that the reliability is improved, that the cost is reduced, and that the power supply device is maintenance free for a long time. In addition, in this embodiment, in the case where the voltage of the battery pack fall within the aforementioned voltage range, a DC/DC converter for charging operation of the battery cell 441 can be eliminated.

Also, a charging operation available temperature range of the battery cells 441 is set into a range different from a discharging operation available temperature range of the battery cells 441. In addition, the discharging operation available temperature range extends on the low temperature side relative to the charging operation available temperature range. According to this construction, it is possible to efficiently discharge also during the nighttime in which the battery cell temperature generally becomes lower as compared with the battery cell temperature when the battery cell is charged in the daytime.

### (Charging/Discharging Operation Controlling Portion 450)

The charging/discharging operation controlling portion 450 properly controls charging current and charging voltage when the battery pack 440 is charged/discharged with by electric power generated by the solar panels 410. In particular, the generated electric power amount of the solar panels 410 substantially varies depending on weather conditions, seasons, the time of day, and the like. The changed generated electric power amount, which constantly varies, is stabilized to properly charge the battery cells 441.

The charging/discharging operation controlling portion also controls output current and voltage when the charged electric power energy is discharged. Known methods can be suitably employed for charging/discharging operation. For example, in order to prevent that the battery pack is over-charged, a pulse charging method can be employed. The charging voltage of the battery cell is determined depending on the number of the serially-connected battery cells to be used. The charging voltage of the battery cell is preferably set at a voltage value lower than the voltage to be determined that the battery cell is fully-charged from viewpoint of the characteristics of the battery cell. In this case, the burden of the battery cells can be reduced, and the life of the battery cells can be increased. Therefore, it is possible to provide a maintenance-free power supply device. For example, in the case where lithium-ion rechargeable batteries are used as the battery cells, when the charging voltage is not set at conventional voltage of 4.2 V/cell but at lower voltage of 4.0 V/cell, the battery cells can have a longer life. Therefore, the replacing cycle of the battery pack can be longer.

Discharging operation can be controlled in a PWM manner. In this case, the lighting brightness and power consumption can be adjusted by adjustment of the pulse width and the duty ratio in discharging operation. In particular, in the case where the illumination adjustment of LED is controlled in a PWM manner, adjustment of the duty ratio of PWM can easily suppress the illumination variation caused by battery voltage variation in accordance with the depths of discharge of the battery cells. As compared with illumination adjustment controlled by a transformer or the like, electric power can be efficiently supplied. Therefore, it is possible to surely provide long lighting ON time.

The charging/discharging operation controlling portion 450 can determine switching of charging/discharging operation of the battery cell 441 based on the voltage of the solar panel 410. That is, at sunrise, when the voltage of the solar panel 410 rises, the battery cells 441 are started being charged. Also, at sunset, when the voltage of the solar panel 410 drops, the battery cells 441 are switched from the charging mode to the discharging mode, and start driving the lighting portion 4.

Since the charging/discharging operation controlling portion 450 is accommodated in the battery box 420, the temperature of the battery cells 441 or the like can be easily controlled, and in addition to this, it is possible to avoid that signal wire lines for controlling the charging/discharging operation of the battery cells 441 and the like are externally exposed. In particular since the wiring distance of wire lines as main wire lines can be minimized that connect the solar panels 410 to the battery cells 441, it is possible to suppress rubbing wear caused by wind and the like, and failures such as poor contact, disconnection and the like. Therefore, it is possible to provide stable and reliable construction with excellent weather resistance.

In the solar battery power supply device 400, electric power generated by the solar panels 410 is stored in the battery pack 440 during the daytime, and the light 404 of LEDs as the lighting portion is driven for illumination during the nighttime by electric power stored. Current restriction resistors and the LEDs are serially connected to each other in the LED light 404. Thus, the LEDs are supplied with current that is determined by the applied voltage and the restriction resistance value. In conventional electric power systems, the voltage of the battery is directly applied to an LED light when the LED light is driven for illumination. Accordingly, the LED light is supplied with current that is determined by the restriction resistance in the LED light and the voltage of the battery. Generally, battery voltage increases with battery remaining capacity amount, and the brightness of LEDs increases with current flowing through the LEDs. Accordingly, in the conventional systems, the brightness of the LED light is higher when the LED light starts illuminating, i.e., at sunset, and then decreases as time elapses. In addition, the brightness of the LED light becomes low if battery voltage is lowered in a cloudy or rainy day, for example.

Contrary to this, in this embodiment, the LEDs are controlled by the switching circuit 464 so that the LEDs do not illuminate during the daytime. Also, the LEDs are controlled additionally in a PWM control manner so that the ON-duty ratio of PWM is controlled inversely with battery voltage. Thus, the brightness of the LEDs can be kept constant. Specifically, in an exemplary PWM duty ratio determination method, several ranges of battery voltage are previously specified, and duty ratios corresponding to these voltage ranges are stored whereby selecting a duty ratio from the stored duty ratios in accordance with a detected battery voltage value. Alternatively, the average current value can be obtained based on detected current values, and the duty ratio can be controlled so that the average current value approaches a desired average current. When the voltage of the battery pack becomes not more than a predetermined voltage value (second cutoff voltage value) in discharging operation of the battery pack, the output current may be started being controlled in a PWM control manner.

In this type of solar battery power supply device, a control system using a microcomputer is often included for ON/OFF switching between the daytime and nighttime and battery pack protection. Most general-purpose microcomputers include PWM control terminals and the A/D conversion ports. Even if a microcomputer does not have battery voltage detection function, the microcomputer can detect battery voltage when a certain simple circuit is added. Also, lithium ion batteries often include a protection-circuit controlling microcomputer that detects voltage and current. Such batteries can achieve the aforementioned control function only by changing software without additional circuit. In addition, the brightness of the light can be changed in accordance with the state of the battery pack and a lapse of time by using PWM control function similar to the aforementioned control function. For example, if the sun is continuously obscured so that the remaining capacity of the battery pack is lowered, the brightness of the light may be controlled lower. Alternatively, the brightness of the light may be controlled higher at early night, while the brightness of the light may be controlled lower at midnight. Such control function also can be achieved only by changing software of a microcomputer as discussed above without cost increase.

### (Solar Panel 410)

A number of solar cells are arranged in a flat plane in the solar panel 410. The solar panel 410 is a flat plate-shaped panel (solar panel) the solar cell surface of which is exposed as sunlight receiving surface in the solar panel 410. The solar cell can be amorphous silicon group solar cell, crystalline silicon group solar cell, hybrid (HIT) type solar cell of amorphous silicon group and crystalline silicon group solar cells, compound group solar battery such as GaAs or the CIS group solar battery, or organic group solar battery. Since the temperature coefficients of these types of solar batteries are small, there is an advantage in that these types of solar batteries have small variation depending on the seasons of the voltage of the solar panel 410 at maximum output electric power, i.e., maximum output operation voltage Vop. For this reason, the voltage design can be easy to efficiently charge the battery pack through the seasons. In the solar panel 410, the generatable current-voltage property varies in accordance with temperatures. Fig. 13 shows an exemplary output property in the irradiation conditions of AM-1.5 and 1000 W/m² under clear air. As shown in this Figure, the available range of the solar panel gets narrower as temperature increases. Also, the available range will vary with selected charging voltage of the battery cell.

As discussed above, in the battery block in the battery box 420, the battery cells 441 of lithium ion batteries are is electrically connected to each other in four-serial and twenty-parallel connection to be charged/discharged. The voltage of the battery cell will vary in a range about 3.2 to 4.2 V. If the battery cell is used in a relatively high battery capacity range of 3.7 to 4.0 V, the battery voltage of the four-serial connection battery block varies in a range about 14.8 to 16.0 V. Typically, the charging voltage of lead batteries is not more than about 14 V. As compared to the typical charging voltage of lead batteries, when the battery block composed of lithium ion batteries is directly charged by the solar panel, the battery block will be charged at a voltage value higher than the charging voltage of lead batteries. For this reason, as shown in Fig. 13, the battery block will be charged at a high electric power amount (current x voltage). Therefore, the output of the solar panel can be efficiently used.

### (Operation of Charging Circuit)

With reference to Fig. 14, operation of a charging circuit is now described that charges the battery pack 440 by using the solar panel 410. The battery box 420 is connected to the solar panel 410 in the solar battery power supply device 400 shown in Fig. 14. This battery box 420 includes a reverse current preventing portion 452, a charging operation switch 453, the battery pack 440, a voltage detecting portion 455, a current detecting portion 456, and a charging operation controlling portion 451. In this charging circuit, the charging operation controlling portion 451 controls the charging operation switch 453 so that electric power generated by the solar panel 410 is adjusted to proper current and voltage. Thus, the battery pack 440 is provided with electric power at the proper current and voltage, and is properly charged.

The reverse current preventing portion 452 prevents that current flows in the reverse direction from the charged battery pack 440 to the solar panel 410. For example, a Schottky diode is used. The voltage detecting portion 455 detects the charging voltage value and the battery voltage value of the battery pack 440. Also, the current detecting portion 456 detects the charging current value of the battery pack 440. These informational values are sent to the charging operation controlling portion 451. The charging operation controlling portion 451 controls the charging operation switch 453 based on the charging voltage value and the charging current value. Switching elements such as transistors can be employed as the charging operation switch 453. In the charging circuit, the discharging operation control portion controls the charging operation switch 453, and the battery pack 440 is charged with electric power generated by the solar panel 410.

As shown in the modified embodiment of Fig. 15, a protection circuit 457 can be connected between the battery pack 440 and the solar panel 410 if necessary. The protection circuit 457 cuts off charging current if the battery pack 440 is brought into an abnormal charged state such as over-discharged state. For example, a PTC element, a thermal fuse or the like can be used as the protection circuit 457. The PTC element cuts off current if the temperature of the battery pack becomes too high. The thermal fuse disconnects the charging circuit if charging current becomes too high.

The battery box 420 can include a discharging circuit in addition to the charging circuit. An exemplary battery box according to the modified embodiment is described with reference to Fig. 15. In this embodiment, the battery box 420 includes a charging/discharging operation controlling portion 450 instead of the charging operation controlling portion 451. The charging operation controlling portion 451 can control not only charging operation but also discharging operation. The charging/discharging operation controlling portion 450 controls the discharging switch 454 in discharging operation of the battery pack 440, and controls output current and output voltage depending on a load LD.

It should be noted that the circuit shown in Fig. 15 is merely illustrative. Needless to say, other circuits with similar function can be suitably used. For example, although the charging operation switch 453 and the discharging switch 454 are connected between the solar panel 410 and the battery pack 440 in the battery box shown in Fig. 15, the battery pack may be connected between the solar panel, and the charging operation switch and the discharging switch. In this case, the same function can be achieved.

### (Fully-Charged State Determination)

In the charging operation of the battery block, different types of battery cells to be used are charged in different charging manners. Also, the fully-charged states are determined in different manners depending on the types of battery cells and the charging manners. For example, in the case where nickel-cadmium batteries or nickel-hydrogen batteries are used, the batteries are charged in a constant-current charging manner. The fully-charged state of the batteries is determined by detecting voltage drop ΔV of the battery cells that occurs when the batteries are brought close to the fully-charged state. In the case where lithium ion batteries are used, the batteries are charged in a constant-current and constant voltage charging manner in that the maximum current and the maximum voltage are limited (MAX current of about 0.5 to 1 C, and MAX voltage of about 4.2 V/cell). When the current becomes not more than a predetermined value, it is determined that the batteries are brought in the fully-charged state.

However, in the case where the battery block is charged by the solar panel, since electric power generation state varies in accordance with sunlight states. For this reason, charging current will not be kept constant. In particular, in the case where lithium ion batteries are charged by the solar panel, a problem will arise. The reason is that, since charging current sharply varies with the time, when the fully-charged state is determined based on the charging current, it cannot distinguish whether charging current drop is caused by the fully-charged state of the lithium ion batteries or shortage of generated electric power amount of the solar panel. Accordingly, the fully-charged state may be incorrectly determined.

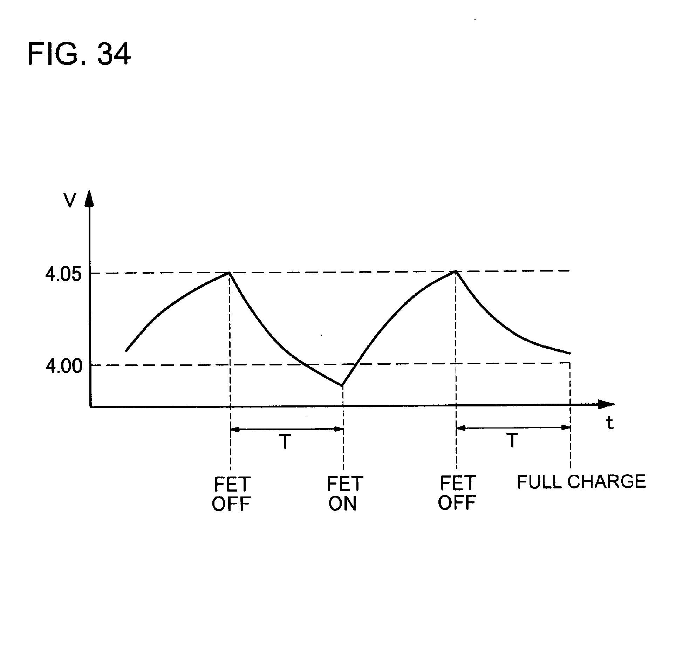

Accordingly, in this embodiment, the battery voltage of the battery block (battery pack) is detected at predetermined timing for a charging operation stop period whereby avoiding such incorrect determination. Battery block solar charging operation and fully-charged state determination according to this embodiment are now described with reference to a graph of Fig. 34 showing the voltage waveform of a battery cell, and the flowchart of Fig. 16. In this embodiment, it is determined that the battery block is fully-charged when the capacity of the block reaches a predetermined capacity value lower than the fully-charged capacity from viewpoint of the characteristics of the battery block.
Here, it is assumed that the charging operation switch is kept ON.

First, it is determined whether charging operation is conducted or not at Step S1. In this Step, it is determined whether charging operation is conducted or not based on whether charging current flows or not. If charging operation is conducted, the procedure goes to Step S2. If charging operation is not conducted, the procedure repeats Step S1. Alternatively, in the charging operation determining step, it may be determined whether the battery block is brought close to a nearly-fully-charged state. For example, lithium-ion rechargeable batteries are first charged at constant current. Then, it is detected whether charging operation is switched from the constant-current charging manner to the constant-voltage charging manner when the cell voltage becomes not lower than a predetermined voltage value. If it is detected that charging operation is switched from the constant-current charging manner to the constant-voltage charging manner, an intermittently-charging mode starts. In the intermittently-charging mode, charging current is not continuously kept constant. In the intermittently-charging mode, charging current is cut off at predetermined timing for the charging operation stop period. For example, the charging operation stop period is five seconds in that charging current is cut off. In addition, in advance of each charging operation stop period, charging current is previously detected by the charging current detecting portion 456.

Subsequently, at Step S2, the battery voltage of the battery block is detected, and this battery voltage is compared with a predetermined voltage value (cut-off voltage value). If the battery voltage is lower than the cut-off voltage value, it determines that the battery block is not brought into the fully-charged state. The procedure returns to Step S1, and the aforementioned steps are repeatedly executed.

The battery voltage is detected by the voltage detecting portion 455. Alternatively, a cell voltage detecting portion may detect the battery voltages of battery cells in the battery block. The detected battery voltages of battery cells may be used instead of the battery voltage detected by the voltage detecting portion. For example, in the case of lithium ion batteries, the cut-off voltage value can be set at about 3.5 to 4.20 V per cell, preferably at about 3.95 to 4.15 V per cell. The battery voltage will slightly decrease from a voltage when charged. Accordingly, the cut-off voltage value is specified in consideration of this decrease amount. In the case of Fig. 34, the cut-off voltage value is set at 4.05 V per cell (about 80% of battery capacity).

If the battery voltage is not lower than the cut-off voltage value, the procedure goes to Step S3. At Step S3, the charging operation switch 453 is turned OFF. As a result, the charging operation is stopped, and the voltage of the battery cell gradually decreases as shown in Fig. 34. Subsequently, the procedure goes to Step S4. At Step S4, it is determined whether a predetermined period of time has elapsed since the charging operation switch 453 is turned OFF. If the predetermined period of time does not elapse, the procedure repeats Step S2. If the predetermined period of time has elapsed, the procedure goes to Step S5. The predetermined period of time is set at a period of time in that the voltage sufficiently drops. For example, the predetermined period of time can be about three to twenty seconds. In the case of Fig. 34, the predetermined period of time is set at T = 5 (seconds).

Subsequently, at Step S5, it is determined whether the battery cell voltage of the battery block exceeds a restart voltage value as a predetermined voltage value. That is, the cell voltage drop gets smaller as the battery cell is brought closer to the fully-charged state. For this reason, the fully-charged state is determined based on whether the battery cell voltage drops to a value lower than the restart voltage value when the predetermined period of time T elapses. If the battery cell voltage is higher than the restart voltage value, in other words, if the cell voltage drop is small, the procedure goes to Step S6-1. At Step S6-1, it is determined that the battery block is brought in the fully-charged state, and the procedure ends. The restart voltage value can be set at a value about 0.3 to 2.0 V lower than the cut-off voltage value, e.g., at 4.0 V/cell, which is 0.5 V lower than the cut-off voltage value.

If the battery cell voltage is lower than the restart voltage value, it determined that the battery block is not brought in the fully-charged state, and the procedure goes to Step S6-2. At Step S6-2, the charging operation switch 453 is turned ON again. Subsequently, the procedure returns to Step S1, and the aforementioned steps are repeatedly executed. Thus, the fully-charged state of the battery block is determined.

It is preferable that open-circuit voltage be detected as the battery voltage of the battery block or the battery cell. However, in the case of the exemplary circuit shown in Fig. 15, since the load LD is constantly connected to the discharging operation circuit so that the discharging switch 454 is constantly kept ON for driving the load LD, the open-circuit voltage cannot be detected. For this reason, in this embodiment, the battery voltage is detected as an alternative to the open-circuit voltage. It should be noted that, in the case where a load is used that is not necessarily constantly supplied with power supply, needless to say, depending on load applications, the open-circuit voltage can be detected as battery voltage, for example, when the load and the discharging operation circuit are temporarily disconnected from each other.

Figs. 17 and 18 are graphs showing exemplary time variation of charging/discharging current when a battery block is charged by a solar panel. Fig. 17 is a graph showing variation of battery capacity RSOC (Relative State Of Charge: relative capacity), battery voltage, current, FCC (Full Charge Capacity: fully-charged capacity), RC (Remaining Capacity), temperature and the like in the case of a conventional fully-charged state determination method. Fig. 18 is a graph showing variation of them in the case of a fully-charged state determination method according to this embodiment. In the Figures, positive charging current indicates that the battery block is charged, while negative charging current indicates that the battery block is discharged. It can be understood from the Figures that the current value of the battery block substantially varies with time, and that the generated electric power amount, i.e., the charging current, of the solar panel sharply varies with time. Since charging current is unstable, in the conventional fully-charged state determination method that detects the fully-charged state based on charging current drop, it may incorrectly detect the fully-charged state even if the capacity RSOC of the battery is small as shown in Fig. 17, in other words, even if the battery block is brought in the fully-charged state.

Contrary to this, according to the fully-charged state determination method of this embodiment, the fully-charged state is not always detected only based on battery cell charging current drop. As a result, it is possible to avoid that the fully-charged state is incorrectly detected even if solar panel output drops causes charging current drop. That is, even if charging current is unstable, the charged state of the battery block can be roughly determined based on the battery voltage in the charging operation stop period. That is, the battery voltage will be increased if the battery block is brought into a certain degree of charged state closer to the fully-charged state, while the battery voltage will be still low if the battery block is insufficiently charged. Form this viewpoint, in order to reliably detect the fully-charged state, this method uses not only charging current but also battery voltage.

As discussed above, the charging operation controlling portion 451 can determine whether the battery block is fully charged with the solar panel. Also, since it is possible to avoid incorrect detection of the fully-charged state, the charged amount of the battery block can be ensured. Consequently, it is possible to effectively use the maximum performance of the battery block.

### (Reverse Current Preventing Portion)

In the case of the exemplary circuits shown in Figs. 14 and 15, since the Schottky diode is used as the reverse current element portion, current constantly flows through the Schottky diode in driving operation. As a result, loss will be produced by voltage drop (about 0.6 V). That is, the loss is produced by the forward direction voltage x current of the diode. This loss reduces charging efficiency. Also, generated heat may affect the charging circuit. In particular, when the solar panel provides high output electric power, the charging current becomes large. Correspondingly, the heat amount will become large. In this case, space may be required for accommodating a heat radiating plate. In addition to this, the component count and the size will be increased. As a result, the cost will be increased. Also, in the case of a large diode, leakage current will be large.

For this reason, in order to avoid the aforementioned problems, a device such as transistor can be used instead of diode. In the case of one transistor, there is a possibility that reverse current may flow when one transistor is OFF. For this reason, two transistors with directionally-opposite properties are serially connected to each other for preventing reverse current flowing. Fig. 19 shows a circuit diagram according to this modified embodiment. This illustrated solar battery power supply device 500 includes an enhancement type FET and a depression type FET used as a reverse current element portion 452B instead of the Schottky diode in the exemplary circuit shown in Fig. 15. These types of FETs have very small ON-state resistances of several mV. Therefore, it is possible to suppress the loss.

Even if two FETs are serially connected to each other, in the case where two FETs are continuously brought in the ON state after sunset, the voltage from the battery block may cause reverse current to flow. For this reason, the FETs are turned OFF at predetermined timing so that the output voltage of the solar panel 410 is detected and is compared with a threshold voltage for detecting sunset. Thus, sunset can be detected. For example, the FETs are turned OFF for one second every one minute for detecting the output voltage of the solar panel 410 for detecting sunset. Even after it is determined that the output voltage of the solar panel becomes lower than the sunset threshold voltage, the output voltage of the solar panel is continuously detected for ten seconds in order to prevent incorrect detection. If the output voltage of the solar panel continuously remains lower than the sunset threshold voltage, the sunset determination is confirmed. Similarly, a sunrise threshold voltage is specified for detecting sunrise. When the FETs are turned OFF, the output voltage of the solar panel is detected and is compared with the sunrise threshold voltage. Even if it is determined that the output voltage of the solar panel becomes lower than the sunrise threshold voltage, the output voltage of the solar panel is continuously detected for ten seconds for confirmation.

In the electric power system shown in Fig. 1, the solar panel 410 receives sunlight during the daytime and generates electric power. The battery block is charged with the electric power. The load is driven with this stored electric power. That is, when it is determined that the battery pack BP is connected to the battery pack charger BC for power assisted electric bicycles, this battery pack is charged. When this battery pack is fully charged, this charging operation ends. The light 404 automatically illuminates during the nighttime, and is automatically turned OFF at dawn. The light and the charger are driven with the electric power generated by the solar panel 410 without using commercial power. This electric power system is a stand-alone system that can supply electric power supply by using clean energy, and which can facilitate CO₂ reduction.

Although the stand-alone solar battery power supply device has been described that has power generation function and is not connected to commercial power in this embodiment, needless to say, the solar battery power supply device can be optionally connected to commercial power depending on applications. For example, as shown in Fig. 20, a solar battery power supply device 600 is connected to commercial power AC. If the sun is continuously obscured for several days so that the capacity of the battery pack becomes insufficient, this system can supply electric power to the load through commercial power AC. Accordingly, it is possible to provide an electric power supply with backup function that can avoid electric power shortage. In this case, the reliability can be improved.

### (Switching Circuit 464B)

In the exemplary circuit shown in Fig. 20, the switching circuit 464B switches between battery block power supply and commercial power supply. This switching circuit 464B monitors the output voltage of the battery block. If the output voltage becomes lower than a predetermined value (third cut-off voltage value), the solar battery power supply device 600 is connected to commercial power through the switching circuit 464B. Thus, switching circuit 464B switches from battery block power supply to commercial power supply.
As a result, the load is driven with commercial power. While the load is driven with commercial power, the battery block can be charged with commercial power. Alternatively, the load may be driven not with commercial power but with electric power supplied from the battery block after the battery block is charged with commercial power. In either case, if the output voltage of the battery block becomes not lower than the third cutoff voltage value, the switching circuit 464B disconnects the solar battery power supply device from commercial power.

### (Embodiment 2: Street Light)

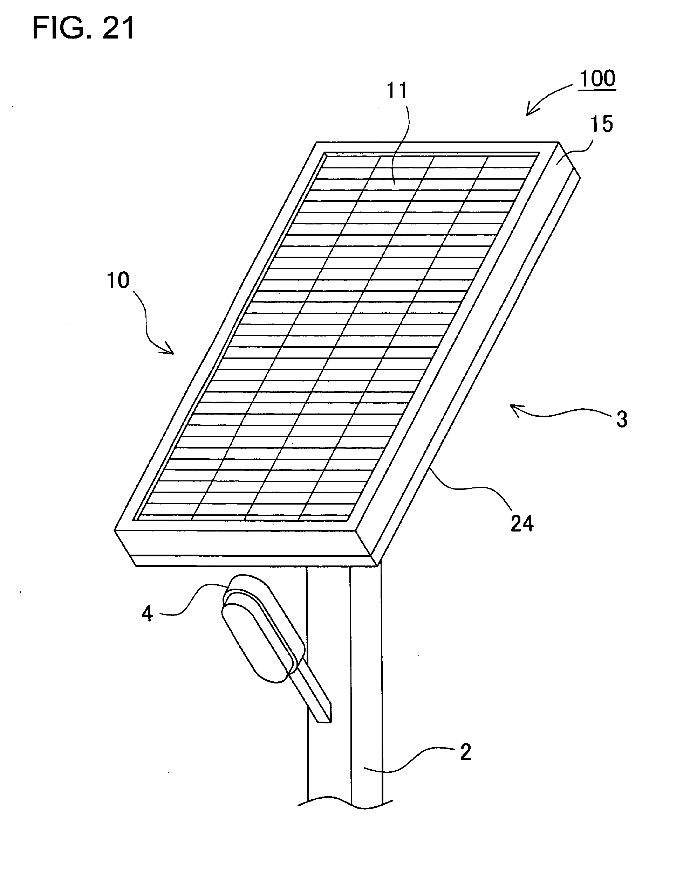

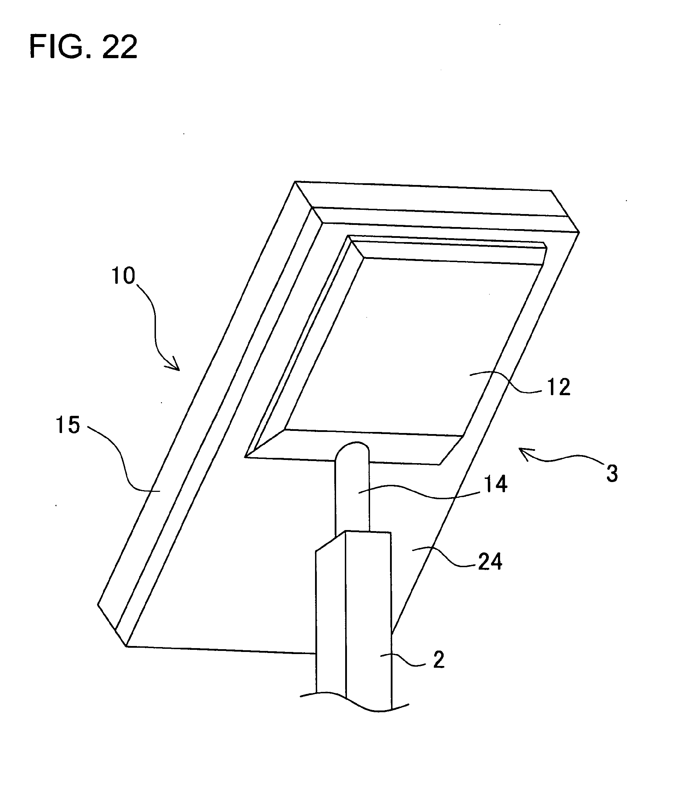

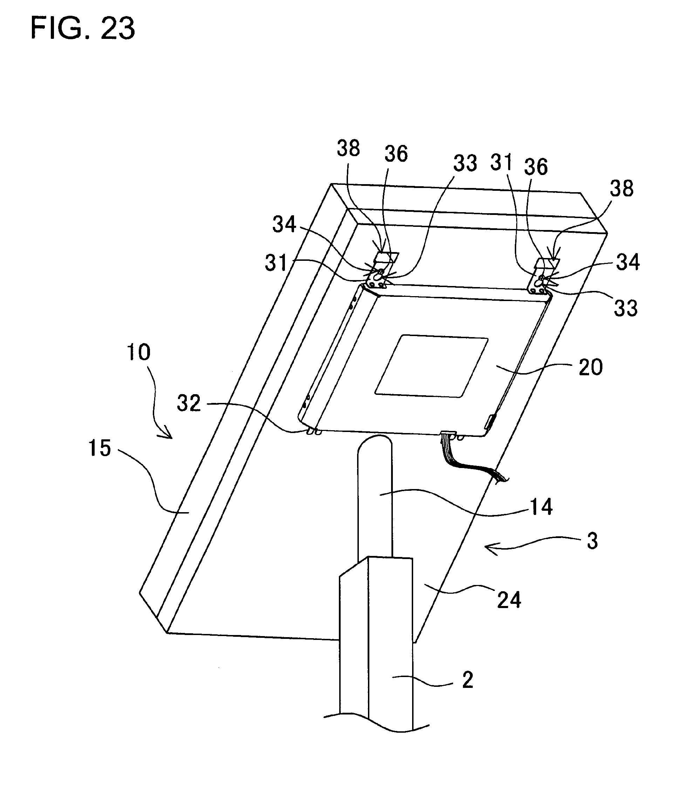

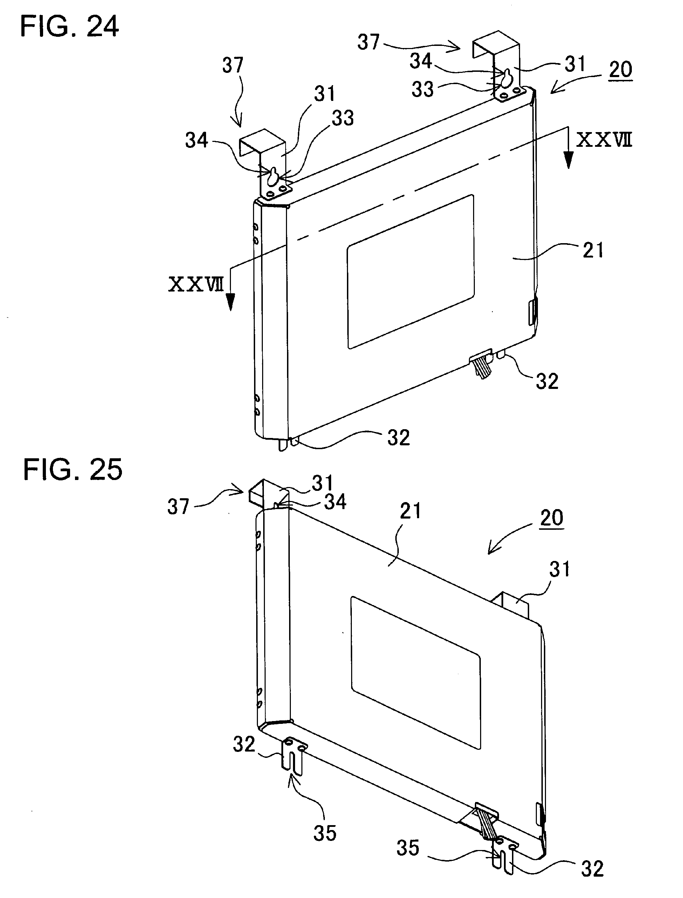

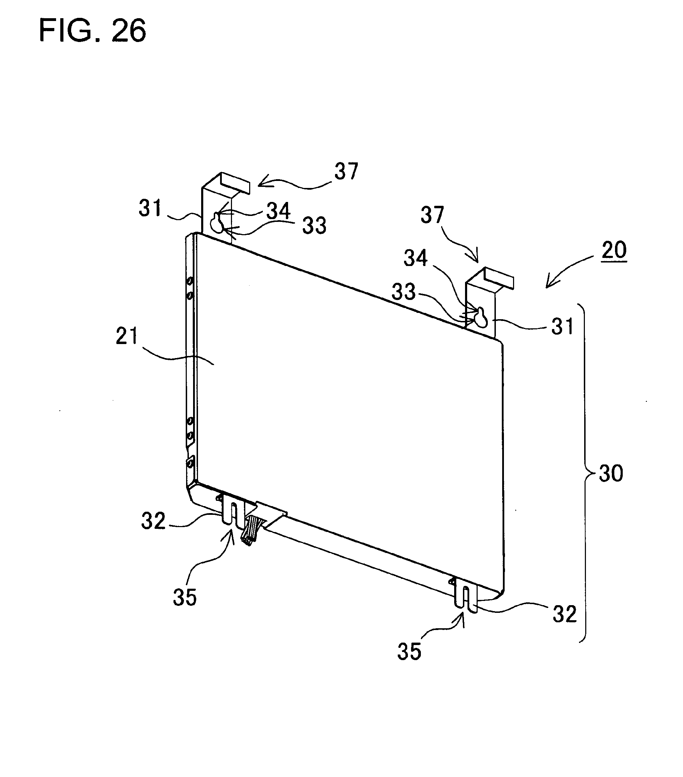

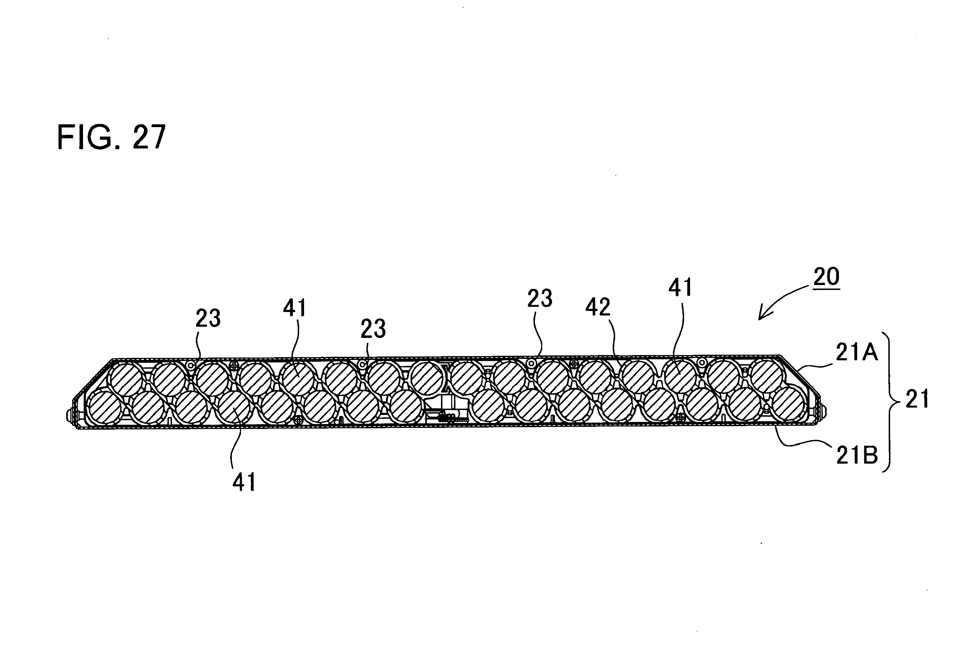

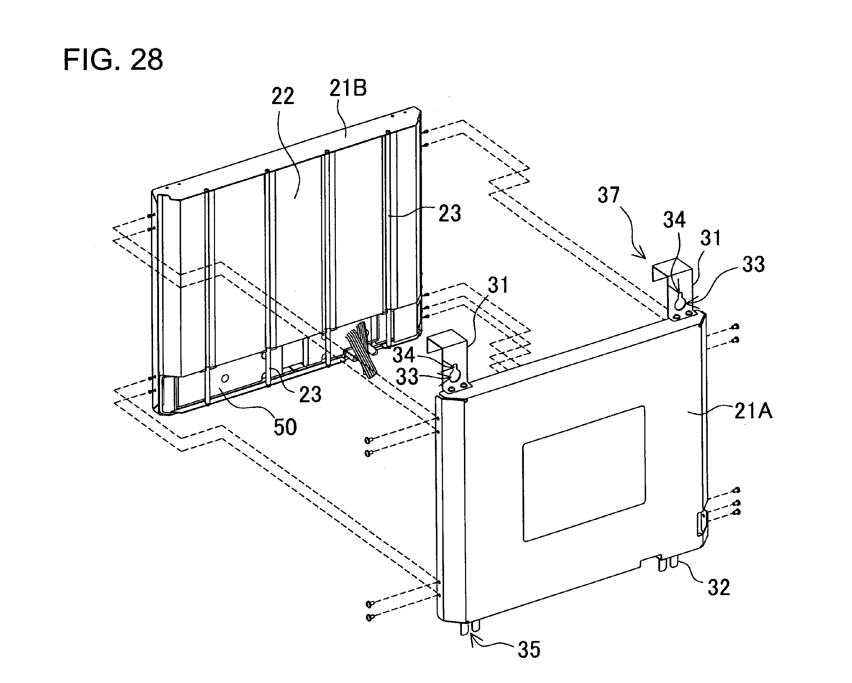

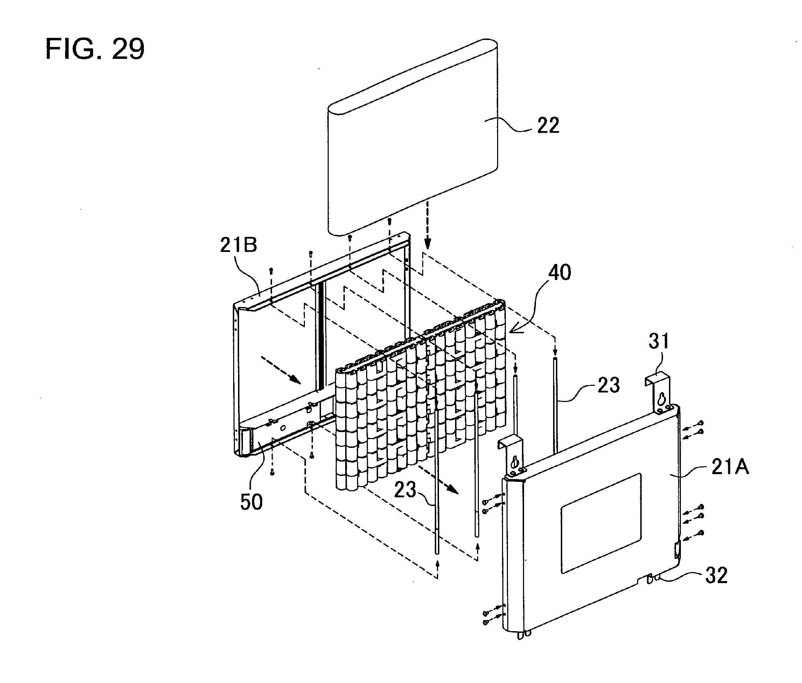

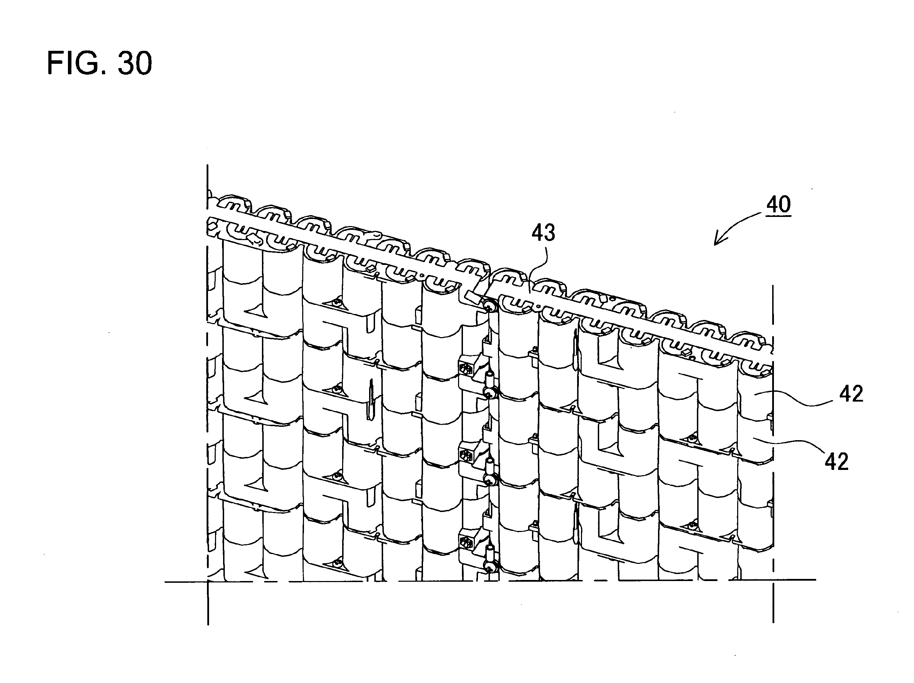

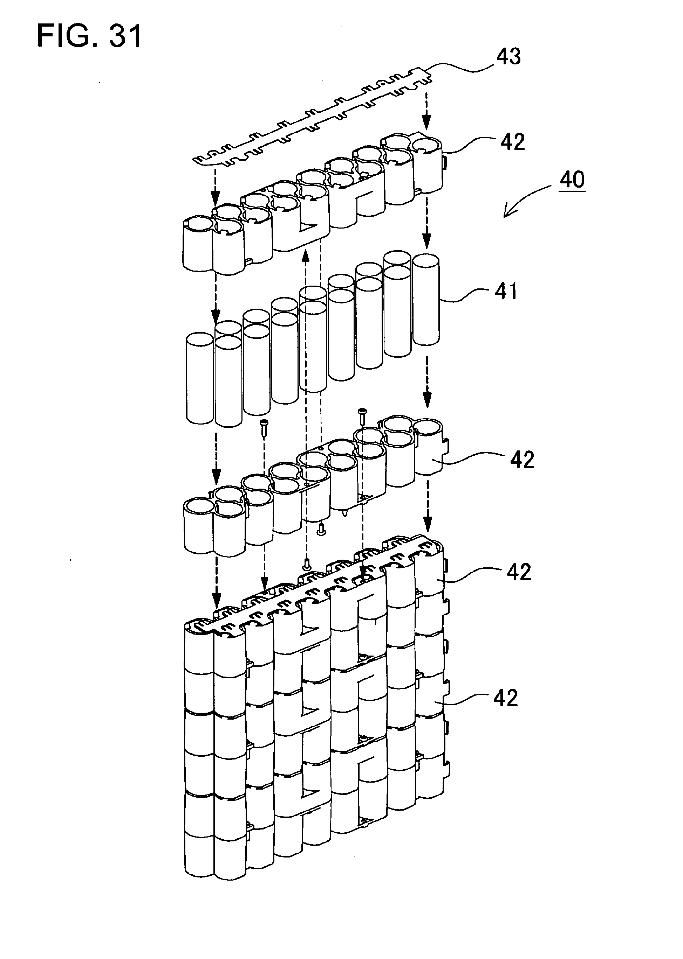

Although the solar battery power supply device 400 has illustratively been described that adds battery pack charging function to the bike shed in the foregoing embodiment 1, the load to be connected to the solar battery power supply device is not limited to this. Various types of electric devices can be connected to the solar battery power supply device. The following description will describe a solar battery power supply device 100 according to an embodiment 2 that drives a street light as load with reference to Figs. 21 to 31. Fig. 21 is a perspective view showing the outward appearance of the solar battery power supply device as viewed from the front side. Fig. 22 is a perspective view showing the outward appearance of the solar battery power supply device as viewed from the front side. Fig. 23 is a perspective view showing the solar battery power supply device shown in Fig. 22 with a battery cover being removed whereby exposing a battery box. Fig. 24 is a perspective view showing the outward appearance of the battery box as viewed from the upper side. Fig. 25 is a perspective view showing the battery box shown as viewed from the lower side. Fig. 26 is a perspective view showing the front surface of the battery box as viewed from the lower side. Fig. 27 is a horizontal sectional view of the battery box shown in Fig. 24 taken along the line XXVII-XXVII. Fig. 28 is an exploded perspective view showing the battery box shown in Fig. 24 with an outer case being removed. Fig. 29 is an exploded perspective view showing the battery box shown in Fig. 28 with a battery pack being additionally removed from an inner case. Fig. 30 is a perspective view showing the battery pack as viewed from the front side. Fig. 31 is an exploded perspective view showing the battery pack shown in Fig. 30 with battery cells in the top row being detached from battery holders.

The illustrated solar battery power supply device 100 is illustratively applied to a street light power supply device. Accordingly, the solar battery power supply device 100 is secured to the upper end of a support pole. As shown in Figs. 21 and 22, the street light includes a base portion 3, the solar battery power supply device 100, and a lighting portion 4. The base portion 3 is secured to the upper end of a sectionally-rectangular support pole 2 with the base portion 3 being inclined. The solar battery power supply device 100 has a rectangular shape in section, and is secured to the base portion 3. The lighting portion 4 is secured to the support pole 2 on the lower side of the solar battery power supply device 100. In the solar battery power supply device 100, a solar panel 10 is exposed on the upper surface of the base portion 3, which is formed of metal and has a rectangular plate shape. The battery box 20 is secured onto the back surface of the base portion 3, and accommodates the battery pack as shown in Fig. 23. As shown in Fig. 22, a battery cover 12 covers the outside of the battery box 20 for protecting battery cells 41 in a weathered environment.
In the solar battery power supply device 100, the solar panel 10 receives sunlight during the daytime and generates electric power. A battery pack is charged with the electric power. The lighting portion 4 is driven with this stored electric power. Accordingly, the street light can illuminate during the nighttime without commercial power. Therefore, it is possible to stand-alone street light with power generating function.

### (Solar Panel 10)

Similar to the embodiment 1, a number of solar cells are arranged in a flat plane in the solar panel 10. The solar panel 10 is a flat plate-shaped panel (solar panel) the solar cell surface of which is exposed as sunlight receiving surface in the solar panel 10. The inclination angle of the solar panel 10 is specified by the angle between the solar panel 10 and the support pole 2.

The solar panel 10 includes a rectangular plate-shaped panel portion 11, and an outer frame 15 that is formed of the aluminum alloy or the like and encloses the outer periphery of the panel portion 11. In the panel portion 11, solar cells are interposed between a transparent tempered glass plate and a film. The tempered glass plate is arranged on the light receiving surface side as the upper surface side. The film is arranged on the back surface side. Gap space between solar cells and the transparent tempered glass plate and the film is filled with transparent resin. In addition, the outer frame 15 includes substantially L-shaped protruding portions 13 as viewed in section at four corner parts on longer edges. In order to secure the protruding portions 13 to the base portion 3, the internally-threaded portions are formed in the surface parts of the protruding portions 13 by using a well-known member. Accordingly, the protruding portions 13 can be secured by bolts inserted from the back surface side of the base portion 3.

The base portion 3 includes a substantially rectangular flat plate 24 formed of metal (iron, etc.), and a cylindrical coupling portion 14 that is secured to substantially the central part of the flat plate 24 welding, or the like. The width of the plate 24 is specified so that the solar panel 10 can be installed on the plate 24 of the base portion 3. A cylindrical coupling portion is arranged at in the upper end of the support pole 2, and receives the coupling portion 14. The coupling portion 14 is inserted in the cylindrical coupling portion, and is secured by a known securing member such as screw from the outside.

An opening is formed in the plate 24, and communicates with the support pole 2. Electric cords from the battery box 20 are wired from the back surface side of the plate 24 to the upper surface of the plate 24 side, that is, to the solar panel 10 side through an opening, and are then drawn into the support pole 2 through the aforementioned opening of the plate 24. The output cords from the solar panel 10 are wired to the battery box 20 through another opening.

Although the optimum inclination angle is known that can supply the annual maximum generated electric power amount in accordance with the latitude of the place where the solar panel 10 is installed, it is preferable that the inclination angle of the solar panel 10 according to this embodiment be greater than the known optimum inclination angle. In consideration of seasonal solar elevation angles, it is preferable that the inclination angle be greater in winter and be smaller in summer. In this embodiment, since the inclination angle is greater than the typical inclination angle, the generated electric power amount can be increased particularly in winter. Since the inclination angle is thus specified, the generated electric power amount is reduced as compared with the typical inclination angle in summer. However, the solar radiation time is sufficient. For this reason, problems hardly arise in terms of night illumination, illumination time, and the like. On the other hand, since the inclination angle is specified suitably for winter, the solar panel 10 can receive a larger amount of heat quantity from sunlight in winter. The heat quantity by sunlight can cause the temperature of the battery cells to rise, and can improve generated electric power. Accordingly, it is possible to suppress that low temperature of battery cells reduces the charged amount of the battery cells, that is, reduces electric power. On the other hand, it is possible to suppress heat quantity that is received by the solar panel in summer. As a result, it is possible to surely supply electric power in winter and to suppress the temperature rise in summer.

### (Battery Box 20)

The battery box 20 is secured onto the back surface of the solar panel 10. The battery box 20 has a low box external shape as shown in Figs. 24 to 27, etc. The attachment surface of the battery box 20 is flat to be attached onto the solar panel 10. As also shown in Fig. 24, the side surfaces of the battery box 20 are tapered toward the back surface for reducing air resistance. The battery box 20 includes a metal exterior case 21 that is arranged on the exterior side and has excellent thermal conductivity. Attachment portions 30 are arranged at the four corner parts of the battery box for attachment of the battery box to the solar panel 10. This battery box 20 is secured substantially in parallel to the solar panel 10 through the metal attachment portions 30. Thus, even after the battery box 20 is attached to the solar panel 10, the solar panel 10 and the battery box 20 can integrally form a flat shape. As a result, the solar battery power supply device 100 can have a slim outward appearance. The battery pack accommodated in the battery box 20 is arranged spaced at a distance away from and in substantially parallel to the solar panel 10. As a result, the battery cells 41 can be uniformly warmed by heat received from sunlight by the solar panel 10. Therefore, the charging operation efficiency can be improved especially in winter. Since the solar battery power supply device is designed so that the temperature of the battery pack 40 may not exceed the available highest charging temperature in summer and may not be lower than the available lowers charging temperature in winter, the rechargeable batteries can be efficiently used.

In addition, it is preferable that the battery box 20 be arranged on the back surface of the solar panel 10 above the attachment portion of the support pole 2 as shown in Fig. 23. In this case, the support pole 2 is less likely to interrupt wind to hit the battery box 20. Accordingly, the battery box 20 will be blown by air. Therefore, it is possible to suppress the temperature rise of the battery box 20 especially in summer.

### (Battery Pack 40)

A plurality of rechargeable cylindrical battery cells 41 are arranged in the battery box 20. The battery cells 41 are serially connected to each other along the axial direction of the cylindrical battery cells as shown in Figs. 28 to 31, etc. Thus, the battery module is constructed. A plurality of battery modules are arranged in plurality of rows in parallel to each other in the battery pack 40. The battery modules are orientated upright. That is, the battery modules are orientated so that the cylindrical battery cells 41 are held in the vertical orientation as shown in Fig. 31. Accordingly, natural convection can facilitate air to flow in the battery box 20 as discussed later. It is possible to avoid that the temperature in the battery box becomes too high. Therefore, the battery cell 41 can be efficiently driven all the year around. In addition to the cylindrical tube shape, the battery cell can be a rectangular battery that has a thick sectionally rectangular plate shape.

In exemplary connection shown in Fig. 27, eight battery cells are arranged in the two stages so that battery cells of one stage are arranged between battery cells of the other stage (offset arrangement). Totally, sixteen cells are connected to each other in parallel. In addition, as shown in Fig. 31, four battery holders 42 are connected to each other in serial in the vertical direction. Thus, four cells are connected serially to each other. Two battery packs 40 shown in Fig. 31 are prepared, and are electrically connected to each other in parallel. Thus, the battery box 20 shown in Fig. 27 of the battery packs 40 shown in Fig. 31 is constructed. The thus-constructed battery cells 41 are electrically connected to each other in four-serial and thirty-two-parallel connection, and are charged/discharged. The number of battery cells may be suitably adjusted that are connected to each other in parallel (for example, twenty-six-parallel connection). Also, the number of battery cells may be suitably adjusted that are connected to each other in serial. Such adjustment can be achieved by changing the battery holder 42, for example.

### (Battery Cell 41)

The cylindrical or tube-shaped battery cells 41 are orientated so that their center axes are parallel to each other. Rechargeable batteries such as lithium ion batteries, nickel-hydrogen batteries, nickel-cadmium batteries can be suitably used as the battery cells. In particular, lithium-ion rechargeable batteries are preferably used. Since lithium-ion rechargeable batteries have high capacity density, it is possible to reduce the size and weight of the battery cells to a size and a weight that allow the battery cells to be attached onto the back surface of the solar panel 10. In addition, lithium-ion rechargeable batteries have the property of causing an endothermic reaction in charging operation. The endothermic effect will be remarkable especially in the case where lithium-ion rechargeable batteries are charged at high charging rate. As a result, it is possible to suppress that battery temperature becomes too high in summer in that the charging rate will be higher. On the other hand, it is possible to suppress battery temperature drop in winter in that the charging rate will be lower. The charging/discharging operation available temperature range of lithium-ion rechargeable batteries is wider than lead-acid batteries and nickel-hydrogen batteries. Therefore, lithium-ion rechargeable batteries can be efficiently charged/discharged all the year around.

As shown in Fig. 29, the battery packs 40 are accommodated in an inner case 22, and are then accommodated by an outer case 21. The inner case 22 has a box shape that has an opening on one side and can accommodate the battery packs 40. The inner case 22 is formed from a metal plate that is excellent in heat dissipation. The inner case 22 can be secured to the interior side of the outer case 21 by threaded engagement of screws, or the like. In the case of Fig. 2, a plurality of metal pipes 23 are arranged orientated in the vertical direction. The metal pipes 23 have threaded holes into which screws are threadedly inserted. The pipes 23 are secured to the interior side of the outer case 21 by the screws so that the inner case 22 comes in press contact with and is secured onto an interior surface of the outer case. The pipe 23 has the substantially same length as the longitudinal length of the interior surface of the outer case 22. V-shaped grooves are formed on the outer surface of the inner case 22 for receiving the pipes 23. The outer case 21 includes an upper case 21 A and a lower case 21 B that correspond to divided half parts of the outer case 21. The inner case 22 is arranged inside the upper case 21A and the lower case 21 B. As shown in Figs. 28 to 29, a charging/discharging operation controlling portion 50 is arranged in a lower part of the inner case 22. The charging/discharging operation controlling portion 50 controls charging/discharging operation of the battery cells 41.

### (Battery Holder 42)

The battery cells 41 are accommodated in the battery holders 42 as shown in Figs. 29 to 31. Each of the battery holders 42 includes two parts that correspond to divided half parts of the battery holder. The cylindrical battery cells 41 are interposed between the two parts of the battery holder so that whole the exterior parts of the cylindrical battery cells 41 are covered by the battery holder. The end surfaces of the battery cells 41 are connected to each other by the lead plates 43 on the end surfaces of the battery holder 42. The battery holders 42 are secured to each other by threaded engagement of screws, or the like. It is preferable that the battery cells 41 accommodated in the battery box 20 be arranged in one stage or not more than two stages in the thickness direction. This arrangement facilitates spreading of heat from the back surface of the solar panel 10 to whole the battery packs 40. In the example of Fig. 27, the battery cells 41 in two states are arranged in the offset arrangement. Accordingly, the battery cells 41 are arranged in roughly one and half stages. As a result, the thickness of the battery box 20 can be thin.

### (Battery Cover 12)

As shown in Fig. 22, battery cover 12 covers the outside of the battery box 20. Since the battery box 20 is covered by the battery cover 12, the battery box 20 can be protected from a weathered environment, birds and the like. In addition to this, the battery cover 12 provides an integral outward appearance of the battery box 20 and the solar panel 10. In particular, it is preferable that the battery cover 12 partially cover the support pole 2. In particular, in the case where the support pole 2 covering part of the battery cover is inclined, it is possible to reduce air resistance by wind blowing upward from the lower side. Therefore, the solar panel 10 can be stably supported. The battery cover 12 is formed from a metal plate that is excellent in heat dissipation and durability, such as sheet metal. In this embodiment, since both the battery box 20 and the battery cover 12 are formed from metal plates, the metal plate surfaces can serve as a heat radiating plate. Therefore, this construction has the advantage of cooling the battery packs 40 accommodated inside the battery box 20 and the battery cover 12 by air. In particular, solar panels 10 are often installed in an elevated place. Accordingly, in the case where the battery cover 12 is arranged in an elevated place and is exposed outside air, it is possible to suppress temperature rise in summer. According to this construction, it is possible to provide an air-cooled solar battery power supply device that uses natural wind. Therefore, it is possible to provide an environmentally friendly stand-alone system that does not use fossil fuel.

### (Attachment Structure)

The battery box 20 is a member separated from the solar panel 10. The battery box 20 has an attachment structure for detachable attachment of the battery box 20 onto the back surface of the solar panel 10. In the example of Figs. 23 to 26, the metal attachment portions 30 as attachment structure are arranged at right and left parts on each of the upper end and the lower end of the battery box 20. A free end side of upper metal attachment portion 31 is bent into a rectangular U shape as viewed in section as shown in Fig. 24. Thus, this upper metal attachment portion 31 serves as a rectangular-U-shaped portion 37. A free end side of the lower metal attachment portion is bent, in the opposite direction to the rectangular U shape of the rectangular-U-shaped portion 37, into an L shape as viewed in section. The lower metal attachment portion 30 is secured to the battery box 20. The upper metal attachment portion has a circular hole 33, and a slit 34 that extends upward from the circular hole 33 and has a width narrower than the diameter of the circular hole 33. The circular hole 33 and the slit 34 serve as attachment opening.

As shown in Fig. 23, rectangular-U-shaped portion receiving openings 38 are formed at positions corresponding to the upper metal attachment portions 31 on the back surface of the base portion 3. The rectangular-U-shaped portion receiving opening 38 is a rectangular opening, and receives the rectangular-U-shaped bent part of the metal attachment portion 31. Furthermore, fixing screws 36 as attachment protrusions engage with threaded holes on the back surface of the base portion. The fixing screws 36 are inserted into the circular holes 33, and are then slide along the slits 34. The screw heads of the fixing screws 36 are screwed so that the upper metal attachment portions are fixed onto the back surface of the base portion. Since the rectangular-U-shaped portion receiving opening 38 receives rectangular-U-shaped portion 37 so that the attachment opening is hung on the attachment protrusion, the coupling structure can be very simple. As a result, failures or malfunctions can be reduced very much. Therefore, it is possible to provide a maintenance-free structure or reliable structure that can be used for a long time. When the battery cells are replaced in an elevated place, the battery cells can be temporarily held by hanging the attachment openings on the attachment protrusions. Accordingly, the battery cells can be prevented from falling in replacement. It is possible to improve the workability.

The lower metal attachment portion 32 has a second slit 35 as shown in Figs. 25 to 26. Screws are engage with threaded holes on the back surface of the solar panel 10. The screw heads of the screws are screwed so that the lower metal attachment portions are fixed onto the back surface of the solar panel 10. According to this attachment structure, the battery box 20 can be easily attached/detached onto/from the back surface of the solar panel 10. Replacement, maintenance and the like of the battery box 20 can be easy. In particular, in applications such as street light in that the battery box 20 is arranged in an elevated place, this structure for easy attachment/detachment is advantageous in attachment or replacement of the battery box.

The aforementioned attachment structure has been described as an exemplary attachment structure. Needless to say, other attachment structure can be suitably used. For example, the battery box 20 can be hooked on the back surface of the solar panel 10 by hook-shaped protrusions or interlocking portions. In addition, the battery box 20 can be attached onto the back surface of the solar panel 10 by combination of hooks and loops, L-shaped metal attachment portions, screws and the like. Known structures for detachable attachment can be suitably used including the aforementioned structures. Although, in the foregoing embodiment, the low box-shaped battery box has been described that is attached onto the back surface of the base portion, the battery box may be arranged spaced away from the base portion.

Since conventional solar battery power supply devices have storage batteries inside a solar panel case, the storage batteries cannot be easily replaced. The life of storage batteries is limited. In particular, conventional nickel-cadmium batteries have relatively short life, and are necessarily replaced. Accordingly, time and effort, or cost for the replacement is a burden. Contrary to this, the battery box 20, which includes the battery cells 41, is constructed as a battery cell unit, and is detachably attached to the solar panel in the embodiments 2. Accordingly, battery cells can be smoothly replaced. Therefore, it is possible to improve the maintenance workability.

### (Lighting Portion 4)

After the battery packs 40 are charged with energy generated by the solar panel 10, the battery packs 40 are discharged to drive the lighting portion 4 shown in Fig. 21. The power consumption of the lighting portion 4 is preferably low. Light emitting diodes (LEDs) are used for the lighting portion 4, for example. As compared with fluorescent lamp and the like, the power consumption of LED is low. LEDs can illuminate even by a small amount of electric power for longer hours as compared with fluorescent lamp and the like. As compared with filament lamp and the like, LEDs hardly burns out. Replacement of LEDs can be virtually eliminated. Therefore, in the case where LEDs are used for the lighting portion, the lighting portion can be maintenance-free for a long time. The LEDs illuminate not only constantly or continuously but also can be driven in a pulse driving manner or can blink. For example, if the remaining capacity of the battery pack 40 is low, the driving operation of the LEDs can be switched from a constant driving manner to a pulse driving manner whereby increasing illumination time. The ON/OFF frequency in the pulse driving manner is preferably set at a high frequency that is not perceivable by human eyes (e.g., about 10 kHz to 50 Hz). In the case where the LEDs are driven in a pulse driving manner, the power consumption can be suppressed. In particular, when the number of hours of sunshine is small in winter, or when cloudy or rainy days continue, the pulse driving manner is useful for increasing illumination time. The battery cell can be charged with electric power generated only by sunlight. Even if the sun is continuously obscured by clouds, rain, and the like, in the case where the LEDs are driven in a pulse driving manner, it is possible to avoid or suppress that electric power stored in the battery cells becomes too low to drive the LEDs at night.

This street light is useful as a light that illuminate at night in environments where commercial power is not available or is hard to be accessed (e.g., mountain-ringed region, and uninhabited island). In such use, the street light is preferable maintenance-free. Accordingly, long life battery cells and a long life lighting portion are preferably used. For example, lithium-ion rechargeable batteries are used as the battery cell. In this case, even a smaller number of battery cells can be charged with high electric power and can be discharged at high electric power. In addition, in the case where the current and voltage of the rechargeable batteries are suppressed when the rechargeable batteries are charged/discharged, it is possible to reduce the burden of the rechargeable batteries and as a result to increase the life of the rechargeable batteries. Also, in the case where light emitting diodes (LEDs) are used for the lighting portion, the power consumption of the LEDs is lower as compared with filament lamp or the fluorescent light. In addition, the light emission life of LEDs is the not less than 10,000 hours. Therefore, LEDs are preferable. The reason is that LEDs can provide a maintenance-free street light.

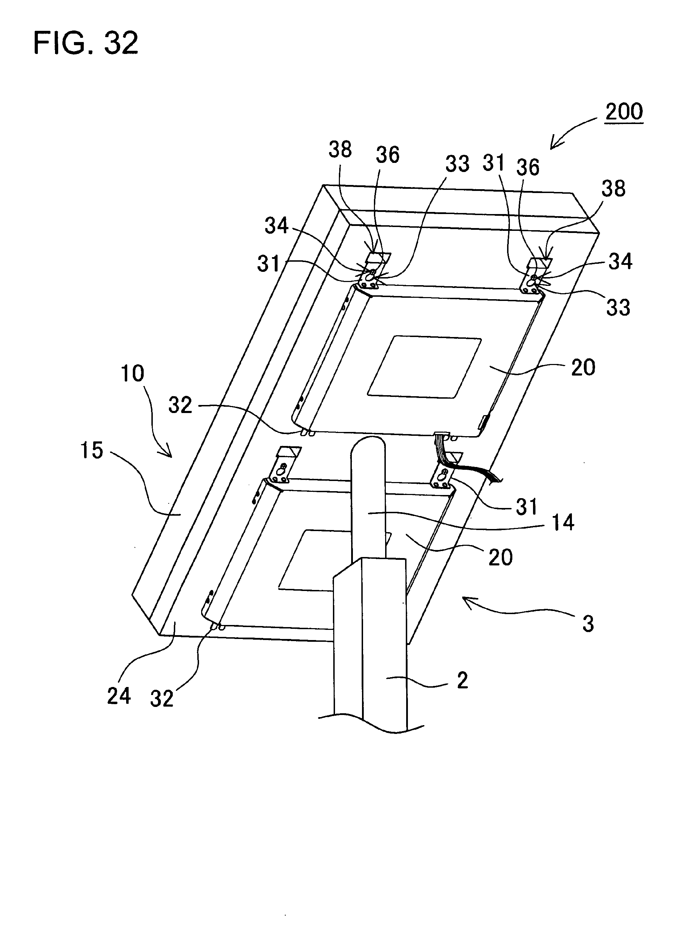

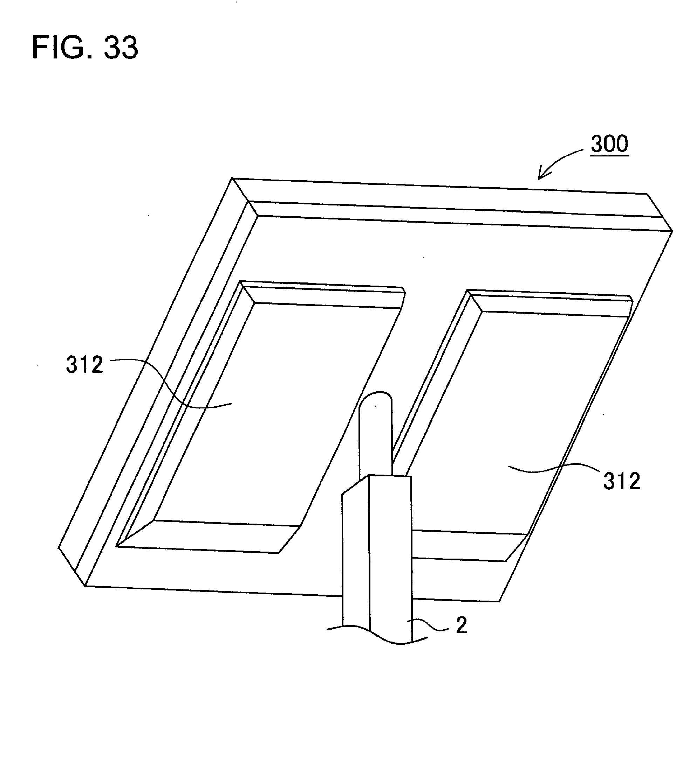

In the foregoing embodiment, one battery box 20 has been described that is secured onto the back surface of the solar panel 10 as shown in Fig. 23. However, the present invention is not limited to this construction. For example, as shown in a solar battery power supply device 200 shown of Fig. 32, two battery boxes 20 can be arranged on upper and lower parts of the solar panel 10 that interpose the support pole 2. Alternatively, three or more battery boxes can be arranged on the solar panel. Alternatively, the battery box can be arranged in landscape orientation. Fig. 33 shows a solar battery power supply device 300 according to a modified embodiment. In the solar battery power supply device 300, two battery covers 312 for covering battery boxes are arranged in portrait orientation on the solar panel. The two battery covers 312 are arranged side by side in the horizontal direction. In this embodiment, the support pole 2 is arranged at the center of the solar panel. The two battery covers 312 are arranged on the right and left sides of the support pole 2.

According to the aforementioned construction, it is possible to provide a stand-alone power supply device that can be used without connection to commercial power. In particular, even in the event of disaster or the like where commercial power is not available, the aforementioned power device can supply electric power. Accordingly, the aforementioned power device can be suitably used as an emergency power supply such as emergency light and an emergency power device. Also, since the aforementioned power device does not consume fossil fuel, the aforementioned power device can be used suitably as environmentally friendly, ecological power supply.

### Industrial Applicability

A solar cell power supply device, and a method for charging a rechargeable battery by using a solar cell according to the present invention can be suitably used for a stand-alone lighting apparatus, a charging apparatus for charging batteries of power assisted electric bicycles without the requirement for commercial power.

## Claims

1. A solar battery power supply device comprising:
a battery pack (40; 440) that includes a plurality of rechargeable battery cells (41; 441) connected to each other in series or in parallel;
a solar panel (10; 410) that includes a plurality of solar cells (41; 441) capable of generating electric power for charging said battery pack (40; 440);
a charging operation controlling portion that can control charging current or charging voltage when the battery pack (40; 440) is charged with electric power generated by said solar panel (10; 410); and
a voltage detecting portion (455) that detects battery voltage of said battery pack (40; 440),
**characterized in that**
said charging operation controlling portion, when said battery pack (40; 440) is brought close to the fully-charged state, cuts off the charging current at predetermined timing for a charging operation stop period, and compares said battery voltage of said battery pack (40; 440) with a predetermined voltage value as a restart voltage value in the charging operation stop period, wherein said charging operation controlling portion determines that said battery pack (40; 440) is fully charged if said battery voltage of said battery pack (40; 440) is not lower than the predetermined voltage value as the restart voltage value, and cuts off the charging current .

2. The solar battery power supply device according to claim 1 further comprising a battery box (20; 420) that accommodates said battery pack (40; 440) and the charging operation controlling portion.

3. The solar battery power supply device according to claim 2, wherein a plurality of said solar panels (10; 410) and a plurality of battery boxes (20; 420) are provided as said battery pack and said battery box, each of battery boxes (20; 420) is connected to corresponding one of the solar panels (10; 410).

4. The solar battery power supply device according to any of claims 1 to 3 further comprising a pair of FETs that are connected to each other in series in opposite directions between said solar panel (10; 410) and the battery pack (40; 440), and serve as a reverse current preventing portion (452; 452B) that allows charging operation of the battery pack (40; 440) from said solar panel (10; 410) and prevents current from flowing from said battery pack (40; 440) to the solar panel (10; 410).

5. The solar battery power supply device according to any of claims 1 to 4, wherein said charging operation controlling portion serves as a charging/discharging operation controlling portion (50; 450) that controls discharging current in addition to the charging current of said battery pack (40; 440), wherein said charging/discharging operation controlling portion (50; 450) starts controlling the output current of said battery pack (40; 440) in a PWM manner when said voltage of said battery pack (40; 440) becomes not higher than a second cutoff voltage value in discharging operation of said battery pack (40; 440).

6. The solar battery power supply device according to any of claims 1 to 5 further comprising a charger (BC) for charging a battery pack of a power assisted electric bicycle as a load that is driven by said battery pack (40; 440).

7. The solar battery power supply device according to any of claims 1 to 6 further comprising a lighting portion (4) that is driven by said battery pack (40; 440).

8. The solar battery power supply device according to claim 7, wherein said lighting portion (4) includes light emitting diodes.

9. The solar battery power supply device according to claim 8, wherein said lighting portion (4) is a street light.

10. The solar battery power supply device according to any of claims 1 to 9, wherein the charging voltage for charging said battery cell (41; 441) is set at a voltage value lower than the voltage to be determined that said battery cell (41; 441) is fully-charged from viewpoint of the characteristics of said battery cell (41; 441).

11. The solar battery power supply device according to any of claims 1 to 10,
wherein said battery cells (41; 441) are lithium-ion rechargeable batteries.

12. The solar battery power supply device according to any of claims 1 to 11, wherein the rated voltage of said battery pack (40; 440) is 0.7 to 0.9 time the maximum output operation voltage of said solar panel (10; 410) at 25°C.

13. The solar battery power supply device according to any of claims 1 to 12, wherein a charging operation available temperature range of said battery cell (41; 441) is set into a range different from a discharging operation available temperature range, wherein said discharging operation available temperature range extends on the low temperature side relative to said charging operation available temperature range.

14. A rechargeable battery solar charging method for supplying charging current to a battery pack (40; 440) that includes a plurality of rechargeable battery cells (41; 441) connected to each other in series or in parallel by using electric power generated by a solar panel (10; 410) that includes a plurality of solar cells (41; 441) whereby charging the battery pack (40; 440), the method comprising: detecting a charging voltage to determine whether said battery pack (40; 440) is brought close to the fully-charged state, and cutting off the charging current at predetermined timing for a charging operation stop period if determining that said battery pack (40; 440) is brought close to the fully-charged state;
detecting battery voltage of said battery pack (40; 440) in said charging operation stop period; and
determining that said battery pack (40; 440) is fully charged if said battery voltage is not lower than a predetermined voltage value as a restart voltage value, and cutting off the charging current.
